# FASCICULE DE BREVET EUROPEEN

(11) **EP 1 717 144 B1**
(45) Date de publication et mention de la délivrance du brevet: **11.06.2008**
(21) Numéro de dépôt: 06013675.1
(22) Date de dépôt: 19.04.2006
(51) Int. Cl.: B64C 25/14, B64C 25/04

(54) **Aéronef à voilure tournante muni d'un atterrisseur auxiliaire de nez et structure porteuse**
Drehflügelflugzeug mit Bughilfsfahrwerk und Befestigungsstruktur
Rotorcraft with auxiliary nose landing gear and support structure

(30) Priorité: 22.04.2005 FR 0504030
(43) Date de publication de la demande: 02.11.2006
(62) Demande divisionnaire de: 06008040.5
(73) Titulaire: EUROCOPTER, 13725 Marignane Cédex (FR)
(72) Inventeur: Bietenhader, Claude, 13410 Lambesc (FR)
(74) Mandataire: Pouillot, Laurent Pierre Paul

(56) Documents cités:
- WO-A-00/05130
- FR-A- 935 170
- FR-A- 1 390 909
- FR-A- 2 677 951
- FR-A- 2 769 584
- GB-A- 527 994
- US-A- 2 312 553
- US-A- 4 821 983
- US-A- 5 562 264
- US-A- 5 944 283

## Description

L'invention vise un atterrisseur auxiliaire de nez pour aéronef à voilure tournante tel qu'un giravion. Elle vise aussi une structure de reprise d'efforts pourvue d'un tel atterrisseur, ainsi qu'un aéronef.

Dans nombre de ces aéronefs, notamment pour assurer une bonne polyvalence d'utilisation de l'appareil des contraintes exposées plus loin, on garantit :
- de réduire le plus possible une garde au sol;
- une sécurité acceptable en cas d'atterrissage d'urgence ou «crash » ;
- une faible résistance à la pénétration dans l'air ; et
- une excellente stabilité au sol.

Ces contraintes notamment, tendent à prévoir des trains d'atterrissages qui sont montés sur l'aéronef de façon escamotable ou repliable et que ces trains présentent un fonctionnement spécifique en cas d'urgence, en particulier de crash.

Par ailleurs, pour certains appareils, il est nécessaire de prévoir que le train soit compatible avec les impératifs navals, i.e. d'atterrissage sur un navire. Alors, le train doit être orientable sur 180 degrés de part et d'autre (+/- 180°), doit pouvoir être verrouillé dans son axe d'orientation et éviter les phénomènes de mouvements parasites dits « shimmy ».

Dans le domaine des aéronefs à voilure tournante, on appelle « shimmy » un mouvement d'oscillation rapide autour de l'axe de pivotement, qui induit des efforts parasites violents pouvant entraîner la destruction de l'atterrisseur.

De plus, l'agencement d'un atterrisseur de nez ne doit pas entraver le fonctionnement et l'installation sur l'appareil, d'équipements de détection tels que des radars.

Le fuselage d'un tel aéronef, ou du moins certains de ses éléments de structure, doivent aussi être compatibles avec les contraintes évoquées.

D'une part, ceci est souvent inconciliable avec une bonne visibilité pour les occupants de l'appareil, entre le compartiment à passagers et le poste de pilotage.

D'autre part, il est utile que l'habitacle présente intérieurement, un agencement qui autorise une circulation correcte de ses occupants entre le compartiment à passagers et le poste de pilotage.

Egalement, il est souhaitable que l'habitacle présente intérieurement, un agencement qui ménage des espaces disponibles, soit pour des éléments constitutifs de l'appareil, soit pour des objets nécessaires à l'équipage ou aux passagers.

Mais jusqu'à présent, les structures de fuselage et atterrisseurs ne permettent pas d'obtenir les résultats escomptés.

Du moins, à l'heure actuelle, le respect de certaines spécifications est-il antinomique à l'obtention d'autres fonctions, ce qui oblige à des compromis qui ne sont pas toujours acceptables en pratique.

Concernant les atterrisseurs, citons ici quelques documents d' intérêt.

Le document FR 1390909 décrit un train d'atterrissage escamotable pour aérodyne.

Le document FR2608242 décrit un amortisseur vérin pour train d'atterrissage d'aéronef à voilure tournante.

Cet amortisseur vérin est destiné à un atterrisseur principal à balancier. Il est alors disposé en position sensiblement verticale et de sorte que la fonction amortisseur, c'est-à-dire l'absorption élastique et amortie de l'énergie de descente de l'aéronef lors de son atterrissage et du touché au sol, soit remplie en compression sous la charge.

Le document FR2635498 décrit un dispositif de manoeuvre en orientation des roues d'un atterrisseur auxiliaire d'aéronef. Une tige coulisse suivant son axe dans un tube, dont l'extrémité libre porte les roues.

Un compas lie en rotation le tube et la tige. Un vérin de rétraction comporte des moyens de limitation d'efforts en cas de crash. Un amortisseur présente son axe longitudinal en coïncidence avec l'axe de la roue.

Le document FR2647170 décrit un dispositif de réduction de la souplesse d'un amortisseur pour atterrisseur d'hélicoptère. Un corps d'amortisseur comporte un piston d'amortisseur et une tige d'amortisseur montée coulissante avec étanchéité dans le corps, et qui définissent dans l'amortisseur une chambre de compression contenant un fluide hydraulique sensiblement incompressible.

Une chambre de détente contient un fluide hydraulique adjacent à un fluide compressible sous pression, et communique avec la chambre de compression par l'intermédiaire de moyens de laminage du fluide chassé de la chambre de compression.

Le document FR2677951 décrit un dispositif d'orientation électrique d'un atterrisseur d'aéronef. Un moteur électrique est fixé à un caisson d'amortisseur, et associé à un arbre moteur qui est disposé parallèlement à l'axe de ce caisson. Une bielle de manoeuvre est fixée à l'arbre moteur et à un tube tournant.

Le document FR2689088 décrit un vérin-amortisseur pour hélicoptère. Il comporte une fonction de limitation d'effort en cas de crash. Il comporte une contre-fiche et assure les fonctions de manoeuvre, d'amortissement et d'écrêtage d'efforts.

Le document FR2684957 décrit un dispositif d'écrêtage d'efforts pour amortisseur de train d'atterrissage d'hélicoptère. Cet amortisseur est articulé via des embouts à rotules. Le train d'atterrissage n'est ni orientable, ni escamotable, tandis que le dispositif d'écrêtage d'efforts est toujours intégré à l'amortisseur.

Le document GB527994 décrit un dispositif d'orientation d'un atterrisseur d'aéronef. L'axe d'orientation de la roue passe par l'axe de pivotement de cette dernière.

Une articulation permet un balancier par rapport à la structure de l'aéronef. Ce dispositif comporte deux bras, en élévation de part et d'autre d'un manchon de réception de l'axe d'orientation de la roue, afin d'assurer le positionnement en élévation de cet axe d'orientation.

Le document US2493649 décrit un système moteur pour roues directionnelles avant d'aéronef avec un amortisseur qui présente un axe longitudinal en coïncidence avec l'axe de la roue.

Le document US5944283 décrit un amortisseur pour atterrisseur anti-crash. Son axe de balancier présente un déport.

Et le document US6257521 décrit un atterrisseur de queue d'aéronef, dont l'axe de balancier présente un déport, afin éviter des mouvements parasites.

Concernant maintenant la structure d'un aéronef à voilure tournante, citons ici quelques documents d'intérêt de ce domaine technique.

Le document EP1052169 décrit dans un hélicoptère, un treillis de poutres rigidement fixé au plancher et à la peau de la base du fuselage.

Le document EP1426289 décrit une structure d'hélicoptère résistant aux impacts et un absorbeur d'énergie.

Cette structure forme un cadre constitué de tubes en fibres de matériaux composites renforcés, au lieu de poutres à section transversale en "1". Les tubes sont remplis de matériaux moussants. Les tubes sont placés sous la paroi latérale à des points de charge induite en cas de crash.

Ce document ne prévoit pas l'interposition d'un caisson à parois pleines à distance de parois latérales du fuselage, au-dessus d'un train auxiliaire de nez lui-même disposé à proximité du centre de l'appareil suivant sa direction transversale.

Le document FR2629045 décrit un ensemble structural d'avion léger. Un compartiment pour passager(s) est constitué d'une cloison centrale ou principale en arrière du compartiment, d'une cloison avant à l'extrémité avant du compartiment, et d'une poutre centrale creuse disposée suivant la direction longitudinale de l'avion.

Cet ensemble est renforcé par les parois de fuselage. Sur la cloison arrière, sont fixés la partie arrière du fuselage et un train d'atterrissage principal.

La partie avant de la poutre centrale est alors utilisée pour loger une partie de ce train en position rétractée.

Le document FR2693976 décrit un fuselage d'hélicoptère comportant une structure centrale à laquelle sont reliés une structure avant, une structure arrière et un train d'atterrissage.

Ces structures supportent une boîte de transmission, un rotor principal et un moteur.

La structure centrale comporte une ossature munie d'éléments d'habillage qui définissent la forme extérieure du fuselage. L'ossature présente sensiblement la forme d'un hexaèdre avec des panneaux d'ossature assemblés entre eux.

Le document GB724999 décrit un cadre d'aéronef tel qu'un hélicoptère. Ce cadre est en forme de treillis de tubes laissant de larges ouvertures latérales. Afin de former le fuselage, une peau recouvre ce treillis de tubes et un plancher est posé sur la partie de fond de ce treillis.

Le document US4593870 décrit une structure de fuselage d'aéronef, en particulier d'hélicoptère. Cette structure comporte sous le plancher de la cabine à passagers, derrière le poste de pilotage, un treillis de poutres en matériaux composites. Ce treillis permet d'obtenir une résistance progressive et accrue en cas d'atterrissage en catastrophe.

Des parois transversales avec ouverture centrale séparent le poste de pilotage à l'avant et la cabine de passagers à l'arrière.

Le document US5451015 décrit un réservoir d'aéronef, spécialement d'un hélicoptère. Ce réservoir est renforcé pour résister à un atterrissage d'urgence, et est disposé à l'arrière d'une cloison pleine transversale.

Cette cloison, qui est placée à l'arrière de sièges, est munie de nervures afin de participer au support de charges lors du fonctionnement normal de l'appareil.

Le document W00005130 décrit un fuselage d'hélicoptère. Ce fuselage comporte une partie centrale à laquelle sont reliées une partie avant et une partie arrière.

La partie centrale est munie d'éléments de transmission des efforts dus à la boîte de transmission principale, au rotor principal, au train d'atterrissage et à la poutre de queue.

Ce document ne décrit pas une structure de fuselage possédant une cavité de logement d'équipements d'atterrissage, ni apte à laisser libre un passage longitudinal de part et d'autre transversalement à ce fuselage, pour des passagers ou membres d'équipage.

Mais l'enseignement de ces documents notamment, ne permet pas de disposer d'un train d'atterrissage de nez et/ou d'une structure pour fuselage d'aéronef à voilure tournante, qui autorisent par exemple conjointement que :
- la garde au sol soit réduite ;
- en cas de crash, la sécurité soit optimale;
- la pénétration dans l'air et l'instabilité soient minimisées;
- le train ne soit pas affecté par le phénomène d'instabilité appelé « shimmy » ;
- le train soit compatible avec les impératifs navals ;
- l'agencement de structure n'occulte pas les radars ou détecteurs ;
- les occupants aient une bonne visibilité vers l'avant ;
- la circulation des occupants dans l'appareil soit aisée ; et
- des espaces intérieurs soient disponibles.

A cet effet, un objet de l'invention est un aéronef à voilure tournante muni d'un atterrisseur auxiliaire orientable de nez, cet atterrisseur étant escamotable sensiblement d'avant en arrière et comportant au moins :
- un ensemble roulant avec un axe de roulement autour duquel tourne au moins une roue ;
- un système oscillant longitudinal par rapport a l'aéronef à proximité d'une extrémité libre arrière duquel système est monté l'axe de roulement, tandis qu'à une extrémité d'articulation avant, longitudinalement opposée à l'extrémité libre, le système oscillant est monté pivotant par :
   - au moins une articulation transversale d'ancrage sur une structure de reprise destinée à être rendue rigidement solidaire de l'aéronef ;
   - l'axe de roulement étant agencé sur le système oscillant par l'intermédiaire d'un pivot d'orientation dont l'axe d'orientation est sensiblement sécant à l'axe de roulement ;
- ce pivot d'orientation permettant de braquer la roue de part et d'autre d'une position correspondant au roulage de l'aéronef en ligne droite ;
- un actionneur d'orientation, relié à une partie du pivot d'orientation solidaire en rotation de l'axe de roulement, de manière à engendrer le braquage de la roue de part et d'autre de la position de roulage en ligne droite ; et
- un vérin-amortisseur, sensiblement étendu suivant une direction longitudinale par rapport au dit aéronef, dont une extrémité de liaison est articulée sur le système oscillant entre les extrémités d'articulation et libre, le vérin-amortisseur ayant à l'opposé axialement de son extrémité de liaison, une extrémité de raccord articulée sur la structure.

Selon l'invention, dans cet atterrisseur, le système oscillant présente un débattement d'élévation, autour de son extrémité d'articulation avant, supérieur à un débattement d'amortissement, et le vérin-amortisseur possède des moyens de rétraction du système oscillant, au-delà d'une position de butée de fin de débattement d'amortissement, de sorte que ce système et le vérin assurent à la fois des fonctions d'amortissement de chocs et d'escamotage de l'atterrisseur.

Selon une réalisation, l'actionneur d'orientation est sensiblement intégré autour de l'axe d'orientation, par exemple l'actionneur comporte un moteur électrique ayant en sortie un entraînement fortement démultiplié, tel qu'un engrenage, avec une douille entraînée en orientation et reliée à la partie du pivot d'orientation solidaire de l'axe de roulement, et une douille statique en orientation solidaire du système oscillant.

Selon une réalisation, le système oscillant est un balancier tiré à bras unique en élévation ; l'axe de roulement de l'ensemble roulant étant monté sensiblement fixe longitudinalement et en élévation par rapport à l'extrémité libre longitudinale.

Selon une réalisation, l'extrémité de liaison et l'extrémité de raccord de l'amortisseur sont articulées par des rotules respectivement sur le système oscillant et la structure, de manière à ce que le vérin-amortisseur soit principalement sollicité le long de son axe de coulissement.

Selon une réalisation non revendiquée, le vérin-amortisseur est sensiblement étendu suivant une direction d'élévation, avec son extrémité de raccord alors dite supérieure, destinée à être articulée à une partie de la structure elle aussi sensiblement étendue suivant la direction d'élévation.

Selon une réalisation non revendiquée, le vérin-amortisseur est sensiblement étendu suivant une direction d'élévation, voire avec une légère inclinaison de bas en haut et d'avant en arrière, par exemple l'extrémité de liaison du vérin-amortisseur est à proximité de l'extrémité libre du système oscillant.

Selon une réalisation, le vérin-amortisseur est sensiblement étendu suivant la direction longitudinale, avec son extrémité de raccord destinée à être articulée à un plancher structural inférieur renforcé de la structure, tandis que son extrémité de liaison est associée à une ferrure de renvoi d'angle ou analogues du système.

Selon une réalisation, le vérin-amortisseur r sensiblement longitudinal est essentiellement destiné à être logé dans un coffre de la structure prévu pour l'escamotage de l'atterrisseur, par exemple l'extrémité de liaison du vérin-amortisseur est à proximité de l'extrémité d'articulation avant du système oscillant.

Selon une réalisation, le vérin-amortisseur est sensiblement étendu suivant la direction longitudinale avec son extrémité de raccord en avant de l'extrémité de liaison, et est par exemple destiné à avoir son extrémité de liaison dans un coffre de la structure, tandis que son extrémité de raccord est en saillie longitudinalement de ce coffre vers l'avant.

Selon une réalisation, le vérin-amortisseur est sensiblement étendu suivant la direction longitudinale et acquière une légère inclinaison à sa rétraction et à l'amortissement, ou inversement, soit ;
- de bas en haut et d'avant en arrière ; soit
- de haut en bas et d'avant en arrière.

Selon une réalisation, le système oscillant est un parallélogramme déformable, afin que le pivot d'orientation ait son axe d'orientation sensiblement maintenu étendu suivant la direction d'élévation, entre des positions haute et basse du système oscillant à l'amortissement et à la rétraction, par exemple ce système oscillant comporte une paire de bras tirés disposés l'un au dessus de l'autre en élévation.

Selon une réalisation, l'ensemble roulant possède au moins une roue dont un flasque et la bande de roulement viennent en élévation sensiblement jusqu'au niveau de l'extrémité libre du système oscillant ; par exemple cet ensemble possède deux roues disposées parallèlement et transversalement de part et d'autre de l'extrémité libre du système oscillant.

Selon une réalisation, l'atterrisseur présente :
- des moyens à fonctionnement spécifique en cas de crash, aptes à inhiber en cas de crash la rétraction et éventuellement l'amortissement par l'amortisseur ; et
- des moyens de limitation d'efforts en cas de crash, agencés pour qu'une fois la rétraction et éventuellement l'amortissement inhibés, l'énergie du crash provoque la remontée du système oscillant sur l'amplitude supplémentaire voire sur le débattement d'amortissement, avec une absorption d'efforts opérée par ces moyens de limitation.

Selon une réalisation, les moyens de limitation sont au moins en partie intégrés au vérin-amortisseur r, et par exemple complètement intégrés à ce dernier.

Selon une réalisation, les moyens de limitation sont au moins en partie intégrés au système oscillant, par exemple des moyens de limitation intégrés au pivot d'orientation apportent à ce système oscillant une course additionnelle d'absorption d'énergie lors d'un crash.

Selon une réalisation, les moyens à fonctionnement spécifique sont agencés pour inhiber en cas de crash, seulement la rétraction du système oscillant, de sorte que l'absorption d'énergie est alors disponible sur l'amplitude supplémentaire de débattement, et éventuellement sur une course additionnelle offerte par des moyens de limitation disposés hors du vérin-amortisseur.

Selon une réalisation, les moyens à fonctionnement spécifique sont agencés pour inhiber en cas de crash, la rétraction et l'amortissement du vérin-amortisseur, de sorte que l'absorption d'énergie est alors disponible sur le débattement maximal.

Un autre objet de l'invention est une structure de reprise d'efforts pour un aéronef à voilure tournante tel qu'un hélicoptère, au moins un atterrisseur tel qu'évoqué étant monté sur cette structure qui comporte au moins :
- un agencement rigide sensiblement étendu suivant une direction d'élévation ;
- un plancher structural inférieur rigidement lié à l'agencement et délimitant au moins en partie un coffre d'escamotage de l'atterrisseur ; et
- un plancher mécanique supérieur, rigidement fixé à l'agencement à proximité d'extrémités supérieures de bras latéraux de cet agencement.

Selon l'invention, la structure présente en vue d'élévation longitudinale une forme de « L » où l'agencement possède un caisson transversalement central, et le système oscillant de l'atterrisseur est disposé sensiblement au droit de ce caisson qui participe au sein de la structure à la reprise des efforts issus de cet atterrisseur.

Selon une réalisation :
- le caisson et au moins deux bras latéraux de l'agencement sont sensiblement étendus suivant la direction d'élévation, tandis que le plancher structural inférieur est étendu depuis ces caisson et bras, sensiblement longitudinalement vers l'avant ;
- le caisson présente un profil au moins partiellement ouvert en section dans un plan longitudinal et transversal, avec au moins une ouverture qui débouche vers l'arrière de manière à ménager au moins un logement ; et
- les bras latéraux de l'agencement rigide sont étendus à distance transversalement du caisson, de manière à dégager transversalement de part et d'autre de ce caisson, un passage de circulation et de visibilité.

Selon une réalisation, cette structure comporte au moins :
- au sein du plancher structural inférieur au moins :
   . un point d'ancrage destiné à recevoir une articulation du système oscillant de l'atterrisseur ;
   deux longerons étendus longitudinalement d'arrière en avant depuis une base inférieure de l'agencement ; et
   • deux traverses, disposées sensiblement à la transversale suivant à angle droit par rapport au caisson, l'une de ces traverses étant longitudinalement en avant du caisson et l'autre sensiblement au droit d'une face arrière de ce caisson;
- ainsi qu'au sein de l'agencement, deux bras latéraux étendus sensiblement en élévation vers le haut depuis l'arrière du plancher structural inférieur, de part et d'autre de l'agencement.

Selon une réalisation, le coffre d'escamotage est agencé longitudinalement depuis la traverse avant du plancher structural sensiblement jusqu'au droit d'une face arrière du caisson et/ou possède sensiblement les mêmes dimensions transversalement que ce caisson.

Selon une réalisation, l'articulation transversale d'ancrage du vérin-amortisseur est disposée sensiblement au droit du caisson, par exemple sur celui-ci ou en dessous du caisson sur le plancher structural inférieur.

Selon une réalisation, l'extrémité de liaison du vérin-amortisseur au système oscillant est disposée sensiblement au droit du caisson, par exemple légèrement en avant d'une face avant de ce caisson suivant la direction longitudinale.

Selon une réalisation, le caisson et/ou les planchers structural inférieur et mécanique supérieur sont au moins en partie en matériau composite, par exemple en éléments formés par sandwiches carbone/carbone et reliés par rivetage et/ou collage.

Encore un objet de l'invention est un aéronef à voilure tournante tel qu'un hélicoptère, qui comporte un atterrisseur monté sur le fuselage via une structure de reprise d'efforts.

Selon l'invention, l'atterrisseur et la structure sont agencés de sorte que les efforts d'atterrissage sont répartis au sein de la structure de reprise par le caisson central, entre les planchers structural inférieur et mécanique supérieur.

Selon une réalisation, la structure est recouverte par un carénage de fuselage.

Par exemple, un tel carénage du fuselage comporte au moins :
- un revêtement travaillant, qui fait partie intégrante du fuselage ; et/ou
- une surface transparente améliorant la visibilité vers l'extérieur de l'appareil ; et/ou
- une trappe, de train ou analogues.

Dans les hélicoptères, les surfaces transparentes du carénage de fuselage sont très utiles pour la visibilité vers le sol, notamment lors d'une posée.

Selon une réalisation, des équipements tels que radars ou de détection sont montés sur la structure de manière à ne pas entraver leur installation et fonctionnement sur l'aéronef.

Par exemple, un radar est monté escamotable dans un espacement ménagé dans la structure de reprise, tel qu'un espacement du plancher structural inférieur.

L'invention est maintenant décrite en référence des exemples de réalisation, donnés à titre non limitatif et illustrés par les dessins annexés dans lesquels :
La figure 1 est une vue partielle schématique d'élévation longitudinale, qui illustre une réalisation non revendiquée de train auxiliaire de nez et de structure de reprise d'efforts, le train étant représenté en trait discontinu en position escamotée, et en traits pleins en position sortie.
La figure 2 est une vue schématique partielle en perspective de devant qui illustre une structure de reprise d'efforts ainsi qu'un atterrisseur auxiliaire de nez non revendiquée.
La figure 3 est une vue schématique partielle en coupe d'élévation longitudinale, qui illustre un exemple de structure de reprise d'efforts conforme à l'invention, et la répartition de contraintes au sein de cette structure.
La figure 4 est une vue partielle schématique d'élévation longitudinale d'un aéronef à voilure tournante conforme à l'invention, qui montre un exemple de disposition en avant de l'atterrisseur auxiliaire de nez, d'un radar tactique et d'un détecteur à infrarouges.
La figure 5 est une vue schématique partielle en coupe d'élévation longitudinale, qui illustre un exemple d'amortisseur sensiblement longitudinal, articulé à un plancher renforcé inférieur de la structure, et au système via une ferrure de renvoi, son extrémité de raccord étant en saillie longitudinalement du coffre vers l'avant.
La figure 6 est une vue schématique partielle en coupe d'élévation longitudinale, qui illustre un exemple d'amortisseur longitudinal et logé dans un coffre d'escamotage, l'articulation de l'amortisseur étant à proximité de l'extrémité d'articulation avant du système.
La figure 7 est une vue schématique partielle en coupe d'élévation longitudinale, qui illustre un exemple de système oscillant en parallélogramme déformable à bras tirés disposés l'un au dessus de l'autre en élévation, et qui illustre une réalisation non-revendiquée des moyens de limitation d'effort de crash étant intégrés à ce système oscillant.

Dans l'ensemble des figures, les éléments similaires sont désignés par les mêmes numéros de référence.

Sur les figures sont représentées trois directions X, Y et Z orthogonales les unes aux autres.

Une direction X dite longitudinale, correspond aux longueurs ou dimensions principales des structures décrites.

Une autre direction Y dite transversale, correspond aux largeurs ou dimensions latérales des structures décrites; ces directions longitudinale X et transversale Y sont parfois dites horizontales, par simplification.

Une troisième direction Z est dite d'élévation et correspond aux dimensions en hauteur des structures décrites : les termes haut/bas s'y réfèrent ; par simplification, cette direction Z est parfois dite verticale.

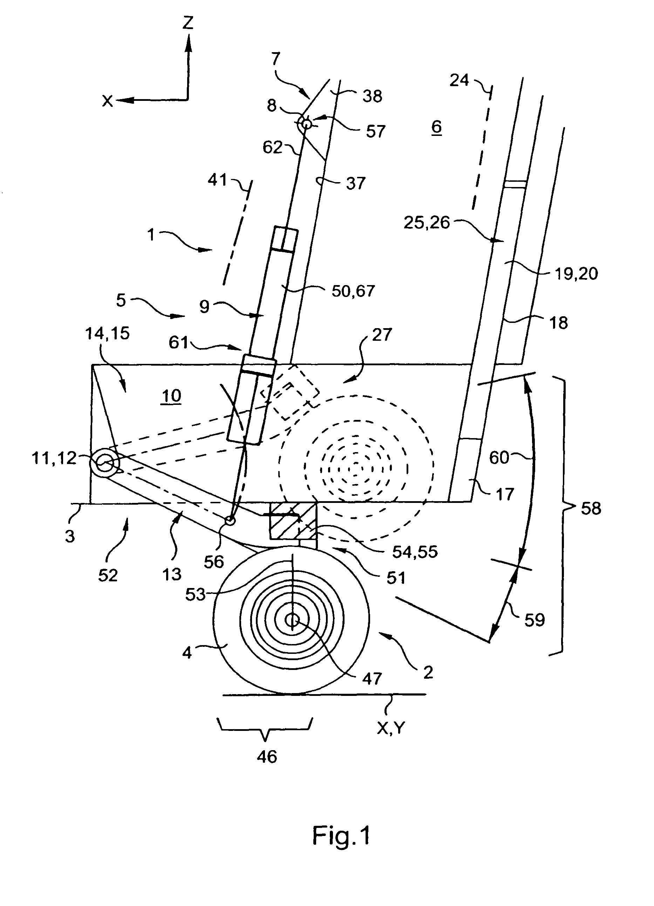

Les directions X et Y définissent conjointement un plan X, Y dit principal (perpendiculaire à celui de la feuille sur la figure 1) à l'intérieur duquel s'inscrit le polygone de sustentation et un plan d'atterrissage.

Sur les figures, la référence 1 désigne de façon générale, un aéronef à voilure tournante tel qu'un giravion.

Sur les figures 1 à 4, la flèche de la direction X est orientée vers l'avant de cet aéronef 1. Lorsqu'un composant de cet aéronef 1, tel qu'un train d'atterrissage 2 ou atterrisseur est placé à proximité d'une extrémité longitudinale de l'aéronef 1 proche de son avant, on dit qu'il s'agit d'un composant de nez.

En illustration, évoquons un exemple où cet aéronef 1 est un hélicoptère dit moyen, c'est-à-dire de l'ordre de 5 à 8 tonnes.

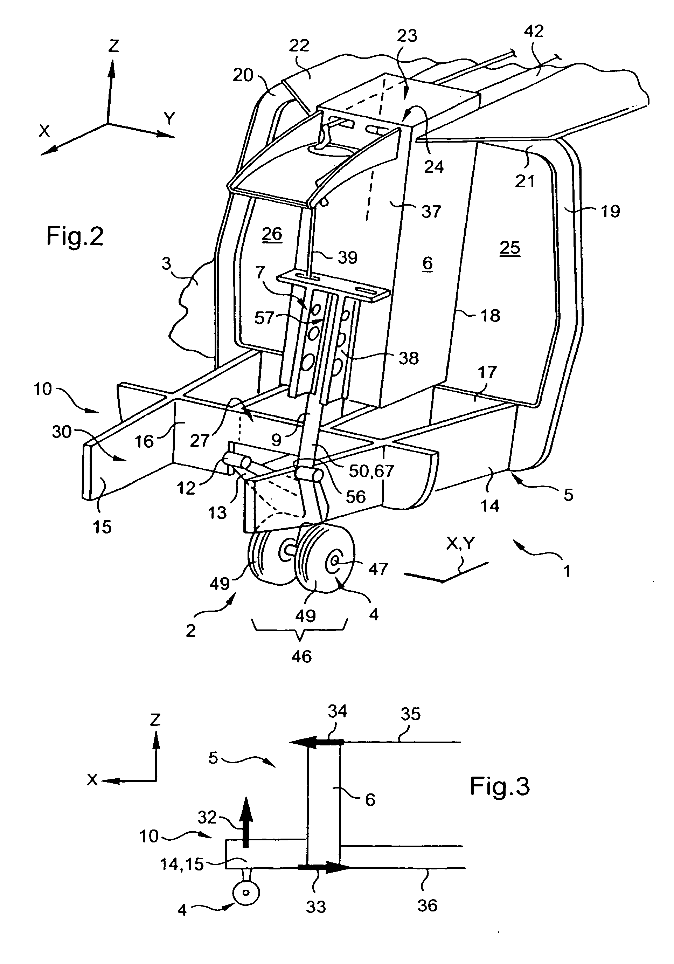

Au sein de cet hélicoptère 1, on remarque, en particulier sur la figure 2, une structure 5 de reprise d'efforts. Une telle structure 5 apporte au fuselage 3 de l'appareil 1, une forte rigidité ainsi qu'un comportement sécuritaire en cas de crash.

La structure 5 forme un agencement rigide qui comporte un caisson 6 transversalement central et sensiblement étendu suivant la direction d'élévation Z.

Sur les figures 1 et 2, ce caisson 6 possède au moins un point d'ancrage 7 destiné à recevoir une articulation 8 d'un vérin-amortisseur 9 de l'atterrisseur 2.

Des réalisations de l'invention prévoient deux vérins-amortisseurs 9 (e.g. parallèles horizontaux ou verticaux), bien que les exemples illustrés n'en prévoient qu'un seul.

La structure 5 comporte aussi un plancher structural 10 inférieur, dit de cabine.

Notons qu'en pratique, on distingue d'une part le véritable plancher de cabine - savoir les surfaces aptes à soutenir les occupants, matériels embarqués et équipements de la cabine- et d'autre part une « structure sous plancher » qui supporte la majeure partie des efforts mécaniques.

Pour sa part, le véritable plancher de cabine calculé pour résister au poinçonnement, est à l'heure actuelle dans la pratique, souvent un ensemble en nid d'abeille composite étanche.

Les longerons 14-15 ainsi que les traverses 16-17 du plancher structural inférieur 10, sont des constituants d'une telle « structure sous plancher ».

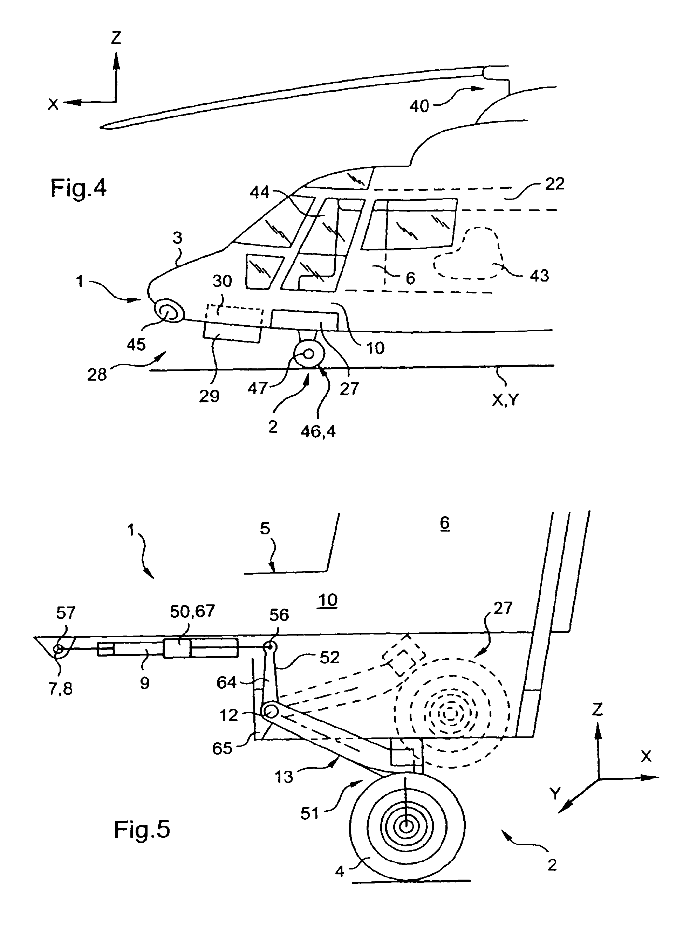

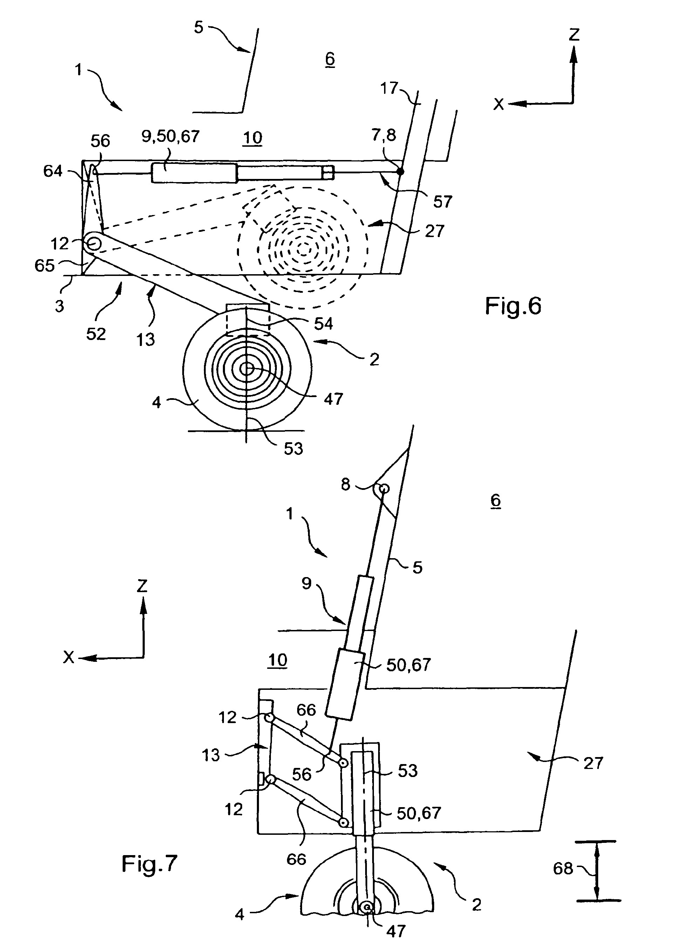

Comme on le verra, ce plancher structural inférieur 10 supporte dans des réalisations des figures 5 et 6, le point 7 d'ancrage d'une articulation 8 du vérin-amortisseur 9.

Sur ce plancher structural inférieur 10 de cabine, est prévu au moins un autre point d'ancrage 11.

Ce point d'ancrage 11 reçoit une articulation 12 d'un système oscillant 13 de suspension et escamotage de l'atterrisseur 2.

Sur la figure 2, le plancher structural inférieur 10 possède deux longerons longitudinaux 14 et 15. Ces longerons sont étendus sensiblement suivant la direction longitudinale X, d'arrière en avant depuis la base inférieure de l'agencement rigide ou caisson 6, de part et d'autre transversalement à ce caisson 6.

Ce plancher structural inférieur 10 possède en outre deux traverses transversales 16 et 17.

Les traverses transversales 16 et 17 sont disposées sensiblement perpendiculairement à l'agencement rigide et longitudinalement agencées :
- l'une 16 en avant du caisson 6 ; et
- l'autre 17 sensiblement au droit d'une face arrière 18 de l'agencement rigide.

En fait, la traverse 17 visible sur la figure 1 est au droit de la face arrière 18 du caisson 6.

Sur la figure 2, on voit qu'afin de former en quelque sorte un cadre transversal évidé, sont prévus deux bras latéraux 19 et 20 qui font partie de l'agencement rigide.

Ces bras latéraux 19 et 20 de la structure 5, sont généralement étendus en élévation, c'est-à-dire sensiblement suivant la direction d'élévation Z, depuis la traverse arrière 17, et vers le haut.

Sur les figures 1 et 2, l'agencement rigide est monobloc.

À cette fin, les bras 19 et 20 sont ici intégrés à la traverse transversale arrière 17 du plancher inférieur 10, ainsi qu'avec une poutre transversale supérieure 21.

Cette poutre supérieure 21 est sensiblement parallèle à la traverse 17 mais étendue à l'opposé en élévation, entre les extrémités supérieures des bras latéraux 19 et 20 qu'elle (21) relie.

La structure 5 comporte en outre, un plancher mécanique supérieur 22.

Notons que le terme plancher est employé dans sa signification typique aux giravions, qui désigne dans le cas d'un plancher mécanique 22, un plateau de support des principaux organes mécaniques, dont par exemple :
- une turbine ;
- une boîte de transmission ; et
- un rotor principal (40 sur la figure 4).

Sur la figure 2, le plancher mécanique supérieur 22 est rigidement fixés sur le caisson 6, à proximité des extrémités supérieures de ce caisson, des bras latéraux 19-20, ainsi que de la poutre supérieure 21.

Comme ceci ressort bien de la figure 1, la structure 5 présente en vue d'élévation longitudinale (c'est-à-dire dans un plan confondu avec celui de la feuille sur les figures 1, 3 et 4) une forme de « L ».

Dans ce « L », le caisson 6 central forme la barre verticale du « L », tandis que le plancher structural inférieur 10 forme la barre à la base de cette lettre.

Autrement dit, le caisson 6 ainsi que les bras latéraux 19 et 20 sont sensiblement étendus suivant la direction d'élévation Z, tandis que le plancher structural inférieur 10 est sensiblement étendu, depuis ces caisson 6 et bras 19-20, sensiblement longitudinalement (X) et vers l'avant.

Soulignons ici que le plancher structural inférieur 10 est rigidement lié au caisson 6, ce qui confère à la structure 5 en « L » de l'invention, sa capacité à transmettre à la cellule de l'appareil 1 des charges en provenance du train 2.

Dans des structures 5 selon l'invention, le caisson 6 et/ou les planchers structural inférieur 10 et mécanique supérieur 22 sont au moins en partie en matériau composite. Dans des exemples, il s'agit d'éléments formés par sandwiches carbone/carbone et reliés par rivetage et collage.

Sur la figure 2, le caisson 6 central présente un profil au moins partiellement ouvert en section longitudinale et transversale, et dont au moins une ouverture 23 débouche vers l'arrière de manière à ménager au moins un logement 24 (aussi visible sur la figure 1).

Ce logement 24 forme un « placard » central structural, ici (voir figure 4 par exemple) installé légèrement en arrière de l'équipage et qui relie le plancher structural inférieur 10 au plancher mécanique supérieur 22.

Comme évoqué, ce logement 24 est ouvert sur sa face arrière 18, du côté longitudinalement de la cabine à passagers, pour y loger des harnais électriques et/ou des matériels d'avionique, par exemple.

Notons que le panneau de la face arrière 18 n'est pas fortement sollicité, c'est-à-dire « travaillant », par suite, la présence de l'ouverture 23 n'affaiblit pas d'un point de vue résistance des matériaux, le caisson 6 et donc la structure de reprise 5.

D'ores et déjà, notons que les bras latéraux 19 et 20 du cadre rigide évidé de la structure 5 sont étendus à distance transversalement suivant la direction Y, de part et d'autre du caisson 6.

Ceci dégage de chaque côté transversalement de l'appareil 1, un passage intérieur respectivement 25 et 26 de circulation et de visibilité, entre les parties arrière et avant de l'habitacle, séparées par le cadre (17, 19, 20, 21) de la structure 5.

Ainsi, sont conciliés des impératifs de rigidité du fuselage, ou de sécurité en cas de crash, avec ceux jusqu'à présent considérés antinomiques de visibilité et bonne circulation.

Dans la réalisation de la figure 1 ou 2, la structure 5 de reprise d'efforts comporte sensiblement au niveau du plancher structural inférieur 10, un coffre 27 - parfois aussi appelé case de train d'escamotage de l'atterrisseur 2.

Dans cet exemple, le coffre 27 est agencée longitudinalement depuis la traverse avant 16 du plancher inférieur 10, jusqu'au droit de l'arrière du caisson 6 central.

Ce coffre 27 possède ici sensiblement les mêmes dimensions transversalement, (Y) que ce caisson 6.

En fait, sur les figures 1 et 2, on remarque que ce coffre 27 est en majeure partie intégré au plancher structural inférieur 10.

Dans des réalisations particulières, le coffre 27 est complètement intégré au plancher inférieur 10.

Ainsi, les efforts d'atterrissage sont ici répartis entre le plancher structural inférieur 10 et le plancher mécanique supérieur 22, comme on le voit mieux sur la figure 3 (qui sera mieux détaillée par la suite).

On voit sur la figure 4, des équipements de navigation et/ou tactiques 28, qui sont montés sur la structure 5 de l'appareil 1.

Par exemple, ces équipements 28 comportent un radar 29 installé et monté escamotable dans un espacement 30 ménagé au sein du plancher structural inférieur 10, de manière similaire à l'atterrisseur 2 mais longitudinalement vers l'avant de l'appareil 1.

En se reportant maintenant à la figure 3, observons les efforts et contraintes appliqués à la structure de reprise 5, tant en fonctionnement usuel de l'appareil 1 où la structure 5 est installée, qu'en cas d'atterrissage en catastrophe.

Notamment grâce à l'intégration du caisson 6 qui agit à la façon d'un poteau structural central à la structure 5 (en « L » retourné sur les figures 1 à 3), on a pu encastrer les poutres du coffre 27, en allant chercher les appuis utiles au niveau du plancher mécanique supérieur 22.

De fait, on obtient une rigidité accrue de la structure 5 vers l'avant longitudinalement (X) du caisson 6.

Dans l'exemple de la figure 4, cette rigidité accrue est obtenue sous un poste de pilotage ou cockpit.

Par conséquent, les masses que supporte la structure 5 et qui sont en porte-à-faux par rapport au fuselage 3, sont elles aussi mieux intégrées du fait de cette rigidité améliorée.

Ceci permet en outre de délester les deux longerons porteurs latéraux 14 et 15.

En illustration, observons sur la figure 3 :
- un moment créé par un effort 32 généré par le train 2 ;
- des efforts de cisaillement inférieur 33 et supérieur 34; et
- des tronçons de revêtement ou peau supérieur 35 et inférieur 36 du fuselage 3.

Ici, l'effort 32 généré par le train 2 est sensiblement orienté de bas en haut suivant la direction d'élévation Z.

L'effort de cisaillement inférieur 33 est sensiblement orienté d'avant en arrière suivant la direction longitudinale X.

L'effort de cisaillement supérieur 34 est sensiblement orienté d'arrière en avant suivant la direction longitudinale X.

On voit bien sur la figure 3 que grâce à la structure 5 en « L » liée au plancher mécanique 22, le moment créé par l'effort 32 est au moins en partie, voire entièrement, équilibré par les efforts de cisaillement 33 et 34 dans des tronçons de revêtement supérieur 35 et inférieur 36.

D'autres particularités de réalisations de la structure de reprise 5 sont maintenant exposées.

Sur la figure 2, on voit bien que le caisson 6 n'est pas accolé aux parois transversales du fuselage 3, et qu'il laisse un évidement libre via les deux passages ou ouvertures 25-26.

En conséquence, le point d'introduction des efforts ne se trouve pas près des parois du fuselage 3, mais au-dessus du train 2 qui est ici placé en position centrale transversalement suivant la direction Y.

Sur la figure 2, à l'extérieur du caisson 6, sur une face avant 37, est installée une platine d'articulation 38 du vérin-amortisseur 9 du train 2.

Également, une ou plusieurs bielles 39 (une seule bielle 39 est représentée à la figure 2) de commande du rotor principal 40 (figure 4), sont installées à l'extérieur du caisson 6, en avant et à proximité de sa face avant 37.

Sur la figure 1, la platine 38 et les bielles 39 sont recouvertes par un carénage 41 (schématiquement représenté en traits mixtes).

Dans la réalisation de la figure 2, la largeur - i.e. sa dimension suivant la direction transversale Y - du caisson 6 ou poteau central est sensiblement égale à celle du coffre 27 (par exemple de l'ordre de 500 mm), et à celle d'une console à équipements située entre le pilote et le co-pilote.

Egalement, la dimension transversale du caisson 6 est sensiblement égale à celle d'un panneau central 42 du plafond mécanique 22, qui est également garni d'équipements et de commandes auxiliaires (par exemple des : coupe feu, frein rotor ou commandes moteurs).

On peut dire de manière imagée et schématique, que la structure 5 présente longitudinalement une forme de « L », et transversalement (par exemple vu de face depuis l'avant), sensiblement une forme de « T » renversé.

Dans une réalisation, les constituants principaux de la structure 5 sont assimilables à des poutres formées de deux flancs mis en forme de rectangles.

Le rectangle inférieur délimite la case de train et le rectangle vertical délimite l'accès au cockpit.

Une telle construction permet de transmettre les efforts du train 2 et de répartir ceux qui ne sont pas repris par la structure 5 vers les revêtements du fuselage 3.

Un tel caisson central 6 permet aussi dans certaines réalisations :
- de maintenir l'avant du plancher mécanique supérieur 22, notamment lorsque des sièges troupe anti-crash sont accrochés à ce plancher mécanique supérieur; et
- de rigidifier la structure 5, et donc l'appareil 1, tout en délestant les deux longerons porteurs latéraux 14 et 15.

Il est bon de rappeler certains aspects pratiques de la structure 5, en termes d'usage de l'habitacle :
- caisson 6 central étant relativement étroit (par exemple 0,5 m) par rapport au fuselage 3 à l'emplacement de la cabine (par exemple 2 m), celui-ci ne constitue plus qu'un masque faible vers l'avant pour les passagers, alors qu'une configuration classique avec un couloir central et des baies latérales d'équipements, obstrue de manière souvent inacceptable, la vue vers l'avant ;
- caisson 6 central permet par ses côtés un accès aisé et rapide (i.e. pratique) à une première rangée de sièges passagers (par exemple le siège passager 43 visible en traits discontinus sur la figure 4) via des portes (puis à l'intérieur de l'appareil 1 via les passages 25 et 26) situées vers l'avant longitudinalement (X) à l'appareil 1, par exemple telles qu'une porte avant 44 illustrée sur la figure 4.

Dans des réalisations selon l'invention, ces aspects pratiques de la structure 5 autorisent des cabines à quatre rangées de sièges de dimension en élévation (Z) modeste (e.g. 1,4 m), puisque toutes ces rangées sont accessibles sans circulation longitudinale (X) dans la cabine.

Une telle circulation nécessite classiquement de disposer d'au moins 0,2 m de plus en élévation (Z), et fait ainsi perdre de la surface disponible au plancher 10 qui aurait été utile pour l'installation de sièges.

Dans des appareils 1 selon l'invention pour missions militaires, la disposition en « L » et en « T » permet au chef de commando de communiquer (via les passages 25 et 26) avec l'équipage et de désigner le meilleur endroit pour être déposé sur un terrain d'opération.

Également, la disposition de la structure 5 dégage les mouvements des mitrailleurs en sabords, alors que dans nombre de configurations connues, ces mouvements sont entravés.

Outre ces aspects, la figure 2 montre la cohérence en largeur des :
- caisson central 6 ;
- coffre ou case 27 ; et
- console et panneau plafond.

Il en découle une facilité naturelle à implanter de bas en haut des harnais électriques, tuyaux hydrauliques ou analogues.

Dans nombre de réalisations, le dimensionnement des panneaux constitutifs de la structure 5 est conçu pour assurer un positionnement de voile en bordure de panneaux.

Par ailleurs, les dimensions internes des éléments de la structure 5 permettent d'y loger des équipements d'avionique, et de les ventiler simplement (par exemple avec la prise d'air par-dessous et la sortie d'air par en haut).

Une maîtrise facilitée des étanchéités vis à vis de la cabine est aussi obtenue.

Dans des réalisations d'appareils 1 selon l'invention pour des missions navales, comme illustré sur la figure 4, les équipements 28 de navigation et/ou tactiques, comportent en avant longitudinalement du radar 29, un dispositif de détection infrarouges 45.

Ce dispositif de détection infrarouges 45 tout comme le radar ici tactique 29 sont tous les deux installés en avant de l'atterrisseur 2.

Ainsi, le dispositif de détection infrarouges 45 dispose d'un champ de vision optimal voire total en secteur avant et vers le bas, et le radar 29 voit sur 360 degrés à l'horizontale dans la majorité des configurations de vol.

A cette fin, on veille dans un appareil 1 selon l'invention pourvu d'un radar 29 que celui-ci ait une bonne visibilité en particulier par le travers en virage, voire légèrement vers le haut en avant pour qu'il puisse aisément assumer des fonctions de radar météorologique.

Sur la figure 4, le radar 29 rétractable dans l'espacement 30 améliore la garde au sol de l'appareil 1, et optimise la traînée aérodynamique lorsque ce radar 29 n'est pas actif.

C'est notamment la compacité longitudinale (X) du train 2 selon l'invention qui permet de disposer aisément d'un espacement 30 de dimensions suffisantes pour escamoter l'essentiel de l'antenne du radar 29 et de son radome en vol (radar off) ou au sol.

Sur la figure 4, l'espacement 30 est longitudinalement disposé entre le dispositif de détection infrarouges 45 et l'atterrisseur 2.

Ceci est avantageux en particulier en virage, puisque le dispositif 45 est alors en position basse, et du fait que ce dispositif 45 est installé dans une zone du fuselage 3 qui devient moins large transversalement.

De plus, au sol, ni le radar 29 ni le dispositif infrarouges 45 n'empêchent ici l'utilisation d'une barre de remorquage de l'appareil 1 par accrochage au train auxiliaire 2.

Décrivons maintenant plus en détail l'atterrisseur ou train d'atterrissage 2 selon l'invention.

Cet atterrisseur 2 est destiné à un appareil 1 et est escamotable sensiblement d'avant en arrière.

De manière générale, l'atterrisseur 2 comporte au moins un ensemble roulant 46 avec un axe de roulement 47 autour duquel tourne au moins une roue 4 avec un flasque 48 et une bande de roulement 49, sur la figure 1 ou 2 formée par un pneumatique.

L'atterrisseur 2 possède aussi un système oscillant 13 à proximité d'une extrémité libre 51 longitudinale arrière duquel système oscillant 13 est monté l'axe de roulement 47.

A une extrémité 52 dite d'articulation avant, opposée suivant la direction longitudinale X à l'extrémité libre 51, le système oscillant 13 est monté pivotant sur la structure 5 de l'appareil 1.

Rappelons ici que la structure 5 est rigidement solidaire de l'aéronef 1.

Sur les figures 1 et 2, l'articulation 12 assure le montage à rotation autour d'un axe géométrique transversal, du système oscillant 13 sur la structure 5, et plus précisément par rapport à son plancher structural inférieur 10 comme on l'a vu dans les exemples précédents.

Afin de réduire voire éviter les déports qui altèrent la facilité de manoeuvre de l'atterrisseur 2, on prévoit que l'axe de roulement 47 de l'ensemble roulant 46 soit agencé sur le système oscillant 13 par l'intermédiaire d'un pivot d'orientation 54 (représenté schématiquement en hachuré sur la figure 1) dont l'axe d'orientation 53 est sécant à l'axe de roulement 47.

Ce pivot d'orientation 54 permet, si besoin est de le rappeler, d'orienter ou braquer la roue 4 de part et d'autre d'une position correspondant au roulage de l'appareil 1 en ligne droite.

Un actionneur d'orientation 55 (aussi représenté schématiquement en hachuré sur la figure 1) fait également partie de l'atterrisseur 2.

L'actionneur 55 est relié à une partie du pivot d'orientation 54 solidaire en rotation de l'axe de roulement 47, de manière à engendrer le braquage de la roue 4 de part et d'autre de la position de roulage en ligne droite.

Sur la figure 1, le pivot d'orientation 54 tout comme l'actionneur d'orientation 55 sont sensiblement intégrés autour de l'axe d'orientation 53.

Dans cet exemple, l'actionneur 55 comporte un moteur électrique ayant en sortie un entraînement fortement démultiplié, tel que des engrenages.

Une douille mobile de l'actionneur 55 entraînée en orientation est ici reliée à la partie du pivot d'orientation 54 solidaire de l'axe de roulement 47.

Une autre douille, statique en orientation, est ici solidaire du système oscillant 13.

Dans une mise en oeuvre de l'invention, afin de permettre des manoeuvres au sol à l'aide d'un chariot tracteur, l'actionneur 55 d'orientation est débrayable.

Notons ici que l'emploi d'un actionneur 55, malgré son coût relativement élevé, présente des avantages par rapport notamment à une configuration de train 2 à roue 4 déportée. Ainsi, on peut aisément obtenir d'un train 2 selon l'invention, avec un actionneur 55, que :
- la roue 4 est facile à verrouiller dans l'axe de l'appareil (en position de vol), par exemple par la coupure de l'alimentation en puissance (électrique ou analogues) une fois cette roue 4 rentrée dans le coffre 27 et orientée dans l'axe de l'appareil 1 ; par contre il est nécessaire pour atteindre le même résultat avec un train usuel à roue déportée, de lui adjoindre un mécanisme spécifique de verrouillage ;
- le rappel dans l'axe de l'appareil de la roue 4 est facilement effectué par l'actionneur 55 lors de l'entrée dans le coffre 27 ; par contre avec un train usuel à roue tirée, un mécanisme spécifique (par exemple des ressorts) doit être adjoint pour atteindre le même résultat ;
- le phénomène de shimmy est empêché du fait de la rigidité angulaire propre à l'actionneur 55 ; par contre un train usuel à roue déportée est sensible à ce phénomène ;
- pour un même appareil 1, la dimension longitudinale d'ensemble d'un train 2 selon l'invention peut aisément être maintenue plus réduite que celle d'un train usuel à roue déportée.

On voit sur la figure 6 que pour éviter les interférences entre le vérin du vérin-amortisseur 9, cet actionneur 55 est installé plus bas sur le pivot d'orientation 54 (c'est-à-dire plus près de l'axe de roulement 47) que dans le mode de réalisation de la figure 1.

Cet actionneur 55 est ici transversalement déporté à côté de ce pivot 54 dans des réalisations, dans le même but.

En revenant aux exemples des figures 1 et 2, on comprend que le vérin-amortisseur 9 est un vérin oléopneumatique à contre fiche.

Une extrémité de liaison 56 de ce vérin-amortisseur 9 est articulée sur le système oscillant 13 à proximité de l'extrémité libre 51 longitudinale arrière, entre ces extrémités libre 51 et d'articulation avant 52 du système oscillant 13.

Classiquement, le vérin-d'amortisseur 9 possède à l'opposé de son extrémité de liaison 56, une extrémité de raccord 57, articulée dans l'exemple de la figure 1 sur la platine 38 rigidement montée sur le caisson 6 de la structure 5 de reprise d'efforts.

On reconnaît là un atterrisseur 2 dit « à balancier » et à roue tirée, escamotable et orientable.

A ce stade, il est bon d'évoquer brièvement quelques atterrisseurs connus, et les inconvénients qu'ils peuvent présenter dans certaines situations.

Il existe un premier type connu de train, à savoir des trains droits, avec une bielle typiquement lorsqu'ils sont fixes, ou avec un vérin de rétraction lorsqu'ils sont escamotables. En général, ces trains ne sont pas anti-crash.

Pour néanmoins obtenir un atterrisseur anti-crash, sur certains appareils est parfois prévu un dispositif avec un tube composite (par exemple en carbone) qui s'écrase à effort quasi-constant. Un tel dispositif est proche de celui qu'on voit sur la figure 7 et qui sera évoqué plus loin.

Avec un pareil dispositif, l'amortisseur est bloqué aux vitesses de défilement verticale de crash (NB : de l'ordre de 8 à 11 m/s, contre usuellement moins de 1 m/s en atterrissage normal).

À cette fin, l'atterrisseur voire plus généralement l'aéronef est équipé de capteurs et unités de traitement idoines, qui par exemple agissent sur les moyens dédiés 61 qui seront exposés ultérieurement.

La jambe de train pivotant pour se mettre à plat, un phénomène de détente instantanée des pneumatiques peut provoquer d'importants dégâts humains et/ou matériels, si le train vient alors fortement percuter le plancher inférieur.

Il est bon de noter qu'un train droit à amortisseur direct, rétractable est applicable à des hélicoptères de tonnage relativement important (par exemple au-delà de 8000 kg), car la garde au sol de tels appareils est en général supérieure à 500 mm, et le plancher du poste de pilotage est surélevé par rapport au plancher cabine.

Par contre, cette solution est difficile à appliquer à des appareils de tonnage plus restreint, pour des raisons d'encombrement.

Ainsi, l'ordre de grandeur minimal des dimensions de la case de train nécessaire est par exemple de l'ordre de 1450 mm en longueur et 500 mm en hauteur.

On connaît aussi un deuxième type de train, à savoir des trains auxiliaires. De tels trains se trouvent sur des hélicoptères de tonnage réduit.

Alors, on a recours à un levier pour réduire la course de l'amortisseur par rapport à la course verticale au centre roue 4.

Ceci conduit à des trains qui sont soit non rétractable soit escamotables.

Il n'est pas non plus possible avec un train de ce deuxième type de réduire les dimensions du coffre de train ainsi que la hauteur du train une fois sorti, pour s'accommoder d'un plancher.

En effet, ce plancher vient au droit du poste de pilotage qui est en prolongement du plancher cabine, et d'une garde au sol proportionnée à la taille de l'appareil.

L'ordre de grandeur des dimensions minimales de case de train est évidemment plus compact lorsqu'il ne s'agit pas d'un train de ce deuxième type, par exemple de l'ordre de 1100 mm en longueur et 400 mm en hauteur.

Grâce à un déport entre l'axe de la roue 4 et son pivot d'orientation souvent important, ce deuxième type de train apporte une grande facilité de virage en roulage au sol sur sollicitation du rotor arrière ou du freinage différentiel des roues principales. Il possède en outre une bonne compacité.

Il est par contre pénalisant en masse et en coût de production.

En outre, sa position reculée longitudinalement au sein de l'appareil nécessite en général une restauration de la stabilité globale au niveau du train principal.

De fait, ce deuxième type de train n'est pas employé en pratique lorsque des fonctions anti-crash son requises, car il conduit aux mêmes difficultés que le train droit.

En outre, il existe avec le deuxième type de train un risque que les roues se mettent en travers sous l'effet de sollicitations latérales et impactent l'une des poutres du coffre de train en rendant l'effacement de la jambe de train impossible.

Des spécificités et avantages du train d'atterrissage selon l'invention peuvent à la lumière de ce qui précède, être mieux comprises.

Il ressort de la figure 1 que l'atterrisseur 2 de l'invention est agencé de façon (voir figure 1 notamment) à ce que le système oscillant 13 présente un débattement maximal 58 d'escamotage, autour son extrémité d'articulation avant 52, supérieur à un débattement d'amortissement 59.

Autrement dit, en fonctionnement au sol, le vérin-amortisseur 9 permet un débattement 59 du système oscillant 13 entre une position basse et une position de fin d'amortissement ou de butée haute.

Un tel débattement 59 est prévu à des fins de stabilisation de l'appareil 1 ainsi que de confort.

En cas d'escamotage, le vérin-amortisseur 9 permet un débattement total dit maximal 58.

Le débattement maximal 58 a quant à lui des fins de rétraction de l'atterrisseur 2 dans le coffre 27.

Aussi, l'amplitude du débattement maximal 58 est supérieure à celle du débattement 59 de fonctionnement au sol, d'une valeur appelée amplitude supplémentaire et illustrée en 60 sur la figure 1.

Cette amplitude supplémentaire de l'atterrisseur 2, s'étend depuis la position de fin d'amortissement à une position escamotée.

N'ont pas été illustrées des butées haute et basse de fins de courses d'amortissement et d'escamotage. Dans des réalisations, on a prévu un débattement d'amortissement 59 de l'ordre (en élévation suivant Z) de 200mm.

Quant à la rétraction, le vérin-amortisseur 9 possède des moyens 61 qui lui sont dédiés, et qui assurent un débattement au-delà de la position de butée haute du système oscillant 13. L'activation de ces moyens 61 de rétraction provoque l'escamotage du train 2 dans son coffre 27.

Notons qu'en cas de crash, des capteurs et unités de traitement de l'appareil 1 peuvent agir sur les moyens dédiés 61, afin d'inhiber la rétraction de le vérin-amortisseur 9 et permettre la limitation des efforts transmis à la structure 5.

On comprend ainsi que dans cet atterrisseur 2 conforme à l'invention, le système oscillant 13 et le vérin-amortisseur 9 assurent à la fois, des fonctions d'amortissement de chocs et d'escamotage de l'atterrisseur 2.

A ces fonctions peut s'adjoindre un fonctionnement spécifique anti-crash, comme on le verra.

Selon les figures 1 ou 2, le système oscillant 13 est un balancier tiré à bras unique en élévation, par distinction avec les trains 2 à parallélogramme déformable.

Ici, l'axe de roulement 47 de l'ensemble roulant 46 est monté sensiblement fixe longitudinalement et en élévation par rapport à l'extrémité libre 51 longitudinale.

Aussi, lors des rotations fonctionnelles de ce bras unique, l'axe de roulement 47 décrit une trajectoire d'amortissement curviligne.

Notons que dans ces exemples, l'extrémité de liaison 56 et l'extrémité de raccord 57 du vérin-amortisseur 9 sont articulées par des rotules, respectivement sur le système oscillant 13 et sur la structure 5.

De fait, le vérin-amortisseur 9 est ici principalement sollicité le long de son axe de coulissement 62 (figure 1).

Dans l'exemple de la figure 1, l'axe de coulissement 62 et la contre fiche du vérin amortisseur 9 sont sensiblement étendus suivant la direction d'élévation Z, avec son extrémité de raccord 57 alors dite supérieure, articulée au caisson 6 central de la structure 5.

Pour être plus précis, le vérin amortisseur 9 sensiblement étendu ici suivant la direction d'élévation Z, présente sur la figure 1 une légère inclinaison ou inclinaison de bas en haut et d'avant en arrière, par rapport à cette direction Z.

Par contre, dans des exemples représentés aux figures 5 et 6, le vérin-amortisseur 9 est sensiblement étendu suivant la direction longitudinale X.

En synthèse, l'atterrisseur 2 à vérin-amortisseur 9 sensiblement longitudinal des figures 5 et 6 a son extrémité de raccord 57 articulée au plancher structural inférieur 10 renforcé de la structure 5, tandis que son extrémité de liaison 56 est associée à une ferrure 64 de renvoi d'angle ou analogues du système 13.

Sur la figure 6 le vérin-amortisseur 9 est logé dans le coffre 27 d'escamotage et l'extrémité de liaison 56 est à proximité de l'extrémité 52 d'articulation avant du système oscillant 13.

Sur la figure 5 par contre, le vérin-amortisseur 9 a son extrémité de raccord 57 en avant de l'extrémité de liaison 56, cette dernière étant disposée dans le coffre 27.

Son extrémité de raccord 57 est pour sa part en saillie longitudinalement suivant X de ce coffre 27, vers l'avant (c'est-à-dire à gauche sur la figure 5).

Ceci est similaire au cas des figures 1 et 2 suivant lesquelles le vérin-amortisseur 9 est sensiblement étendu en élévation (Z), et dépasse hors du coffre 27 vers le haut.

Notons qu'un tel vérin-amortisseur 9 acquière une légère inclinaison à sa rétraction et à l'amortissement, ou inversement, soit ;
- de bas en haut et d'avant en arrière ; soit
- de haut en bas et d'avant en arrière.

Quand la structure 5 (i.e. le plancher 10 sur la figure 1, et une cloison avant comparable à la traverse 16 sur la figure 5) possède une ouverture de passage du vérin-amortisseur 9, celle-ci doit être dimensionnée pour permettre ces mouvements d'inclinaison.

Dans le même ordre d'idées, on voit sur la figure 2 que l'articulation 12 du système oscillant 13 est disposée hors du coffre 27. De fait, la traverse 16 possède une ouverture de passage de l'avant du système oscillant 13.

De telles ouvertures de passage permettent, lorsqu'elles sont par exemple dans une cloison « horizontale » comme le plancher 10, de participer à la réduction de la garde au sol de l'appareil 1.

Lorsqu'il s'agit d'ouvertures de passage avant (par exemple dans une cloison « verticale » comme la traverse 16), il est possible d'ajuster le placement longitudinal (X) de l'atterrisseur 2 en fonction de contraintes auxquelles l'appareil 1 est soumis, comme celles d'équilibre au sol.

En comparaison par exemple avec le deuxième type de train, l'invention permet ainsi un meilleur placement du train.

Également, une ouverture de passage avant permet en dégageant le coffre 27 de participer à la réduction de la garde au sol de l'appareil 1.

Sur les figures 5 et 6 l'extrémité de raccord 57 est articulée à un organe 65 renforcé de la structure 5 de reprise.

Cet organe 65 est distinct du caisson 6, et fait partie d'une face avant transversale du coffre 27 de train. Ici, il est de fait intégré au plancher structural inférieur 10.

On remarque aussi sur les figures 5 et 6, que l'extrémité de liaison 56 est associée à une ferrure 64 de renvoi d'angle ou analogues, elle-même montée pivotante sur l'organe 65 via une articulation 12 transversale.

Suivant la réalisation de la figure 6, l'amortisseur 9 sensiblement longitudinal est agencé de sorte qu'il est essentiellement logé dans le coffre 27 destiné à l'escamotage de l'atterrisseur 2.

Dans la mise en oeuvre de la figure 5, le vérin-amortisseur 9 est sensiblement longitudinal avec son extrémité de raccord 57 en avant de l'extrémité de liaison 56.

Dans la mise en oeuvre de la figure 6, l'amortisseur 9 est étendu longitudinalement avec son extrémité de raccord 57 en arrière de l'extrémité de liaison 56.

Lors de la rétraction du vérin-amortisseur 9, celui-ci pivote légèrement, de sorte qu'il présente à certaines étapes de son fonctionnement :
- pour le cas de la figure 6 une légère inclinaison de bas en haut et d'avant en arrière ; et
- pour le cas de la figure 5, une légère inclinaison de haut en bas et d'avant en arrière.

Dans la variante représentée à la figure 7, le système oscillant 13 est un parallélogramme déformable, afin que le pivot d'orientation 54 ait son axe d'orientation 53 sensiblement maintenu étendu suivant la direction d'élévation Z, entre les positions de butée haute et basse du système oscillant 13.

Sur la figure 7, ce parallélogramme déformable comporte une paire de bras 66 tirés et disposés l'un au dessus de l'autre en élévation (Z).

Chaque bras 66 est relié à la structure 5, par une articulation 12 d'ancrage, distincte de celle de l'autre bras tiré.

Similairement au cas des figures 5 et 6, sur la figure 7, les articulations 12 sont agencées sur une face avant transversale d du coffre 27 de train.

Il convient en outre de noter que dans ces trois réalisations, l'articulation transversale 8 d'ancrage du vérin-amortisseur 9 est disposée sensiblement au droit du caisson 6, et plus précisément :
- sur ce caisson 6 en ce qui concerne la figure 7 ;
- en dessous du caisson 6 et relié au plancher structural inférieur 10, en ce qui concerne la figure 6 ; et
- légèrement en position antérieure par rapport à la face 37 avant du caisson 6 (suivant la direction longitudinale X), en ce qui concerne la figure 5.

Revenons brièvement à la figure 1, pour constater que l'ensemble roulant 46 possède au moins une roue 4.

Son flasque et sa bande 49 de roulement viennent en élévation (Z) sensiblement jusqu'au niveau de l'extrémité libre 51 du système oscillant 13.

Dans l'exemple de la figure 2, on voit que cet ensemble roulant 46 possède deux roues 4 disposées parallèlement avec un axe de roulement 47 sensiblement confondu, ces roues 4 étant agencées transversalement suivant la direction Y de part et d'autre de l'extrémité libre 51 longitudinale arrière.

Une telle configuration est utile pour minimiser le diamètre de ces roues 4 vis-à-vis de la hauteur du coffre 27.

Selon un aspect intéressant, l'atterrisseur 2 des figures présente également un fonctionnement spécifique en cas de crash.

En résumé, on comprend que l'atterrisseur 2 présente :
- des moyens 50 à fonctionnement spécifique en cas de crash, aptes à inhiber en cas de crash la fonction de rétraction et éventuellement celle d'amortissement du vérin-amortisseur ; et
- des moyens 67 de limitation d'efforts en cas de crash, agencés pour qu'une fois la rétraction et éventuellement l'amortissement inhibés, l'énergie du crash provoque la remontée du système oscillant 13 sur l'amplitude 60 supplémentaire voire sur le débattement 59 d'amortissement, avec une absorption d'efforts opérée par ces moyens 67 de limitation.

Dans des réalisations, les moyens 50 d'inhibition, ainsi que ceux (67) de limitation sont intégrés au vérin-amortisseur 9.

Mais les moyens 67 de limitation peuvent être en partie intégrés à ce vérin-amortisseur 9 et en partie intégrés au système oscillant 13.

Des réalisations non représentées prévoient que ces moyens 50 et/ou 67 soient distincts du vérin-amortisseur 9, par exemple disposés en parallèle de celui-ci (9) ou au niveau d'articulations 12, entre la structure 5 et le système oscillant 13.

Sur la figure 7 par exemple, des moyens 67 de limitation et les moyens 50 d'inhibition sont intégrés au pivot 54 d'orientation. Dans cet exemple, les moyens 50 et 67 apportent à ce système oscillant 13 une course 68 additionnelle d'absorption d'énergie lors d'un crash.

Ici, d'autres moyens 67 de limitation et moyens 50 d'inhibition font partie du vérin-amortisseur 9.

Dans d'autres réalisations, les moyens 50 d'inhibition sont agencés pour inhiber en cas de crash, seulement la rétraction du système oscillant 13.

De fait, l'absorption d'énergie est alors disponible sur l'amplitude 60 supplémentaire de débattement, et éventuellement sur la course 68 additionnelle offerte par des moyens 67 de limitation disposés hors du vérin-amortisseur 9.

Il semble néanmoins pratique que les moyens 50 à fonctionnement spécifique soient agencés pour inhiber en cas de crash, la rétraction et l'amortissement du vérin-amortisseur 9

Alors, comme sur la figure 1, l'absorption d'énergie est disponible sur le débattement 58 maximal.

Autrement dit, dans des exemples, les moyens 67 possèdent des éléments et/ou fonctionnalités partagées avec les moyens de rétraction 61.

Dans un tel cas, le vérin-amortisseur 9 est dans un état verrouillé, et son comportement mécanique est assimilable à celui d'une bielle ou contre fiche. Dans le cas assez courant d'un vérin-amortisseur 9 hydraulique, des laminages ou autres obturations de passage de fluide permettent l'obtention d'un tel comportement.

Dans d'autres réalisations, des moyens 67 de limitation d'efforts sont distincts du vérin-amortisseur 9.

Ainsi sur la figure 7, un cylindre interne sur lequel est monté l'axe de roulement 47 de la roue 4, est retenu par des moyens 67 sous forme de plots à rupture contrôlée qui laissent remonter le cylindre en cas de crash.

Une valeur de la course ou débattement de crash est par exemple de 40mm.

D'autres moyens 67, par exemple à déformation plastique contrôlée sont prévus dans des réalisations non représentées de l'invention.

Selon l'invention on peut donc obtenir un appareil 1 à voilure tournante tel qu'un hélicoptère 1, qui comporte un atterrisseur 2 monté sur le fuselage 3 via une structure 5 de reprise d'efforts.

Ces atterrisseur 2 et la structure 5 sont alors agencés de sorte que les efforts d'atterrissage soient répartis au sein de la structure 5 par le caisson 6, entre les planchers inférieur structural 10 et supérieur mécanique 22.

Selon une réalisation, la structure 5 est recouverte par un carénage, au sein du fuselage 3.

Par exemple, un tel carénage du fuselage 3 comporte au moins :
- un revêtement travaillant, qui fait partie intégrante du fuselage 3 ; et/ou
- une surface transparente améliorant la visibilité vers l'extérieur de l'appareil 1 ; et/ou
- une trappe, pour le train ou analogues.

Dans les hélicoptères, les surfaces transparentes du carénage de fuselage 3 sont très utiles pour la visibilité vers le sol, notamment lors d'une posée.

Comme on l'a vu, des équipements tels que radars 29 ou dispositif 45 de détection sont montés sur la structure 5, de manière à ne pas entraver leurs installation et fonctionnement sur l'appareil 1.

Un tel appareil 1 est dit polyvalent car il permet entre autres la réalisation des missions suivantes :
- transport de passagers civils, y compris sur plate-forme en mer ;
- recherche et sauvetage;
- évacuation sanitaire ;
- transport de troupes militaires ;
- identification et contrôle de vaisseaux de surface ou de sous marins.

Comme évoqué plus haut, des spécifications favorables à l'ensemble de ces missions sont notamment :
- la garde au sol modérée de l'aéronef ou appareil 1, par compromis entre la proximité du fond de son fuselage 3 avec un terrain d'atterrissage (X, Y) non préparé ;
- l'accessibilité directe à la cabine par des commandos ou à l'aide de marchepieds simples pour des passagers ;
- la stabilité latérale (vent de travers, pont de bateau) ;
- des capacités anti-crash dans le train d'atterrissage 2 et dans le fuselage 3 ;
- des atterrisseurs 2 escamotables afin de réduire la consommation en carburant et/ou d'accroître la vitesse de l'appareil 1 sur des missions longues (e.g. de plus de 3 heures), et de dégager le champ du radar sur 360 degrés.

Il est également aisé avec l'invention, qu'un polyèdre de sustentation (un triangle sur les appareils 1 à trois atterrisseurs, dont un atterrisseur de nez 2) soit bien placé par rapport au centre de gravité de l'appareil 1.

Ceci est rendu possible par le fait que les roues 4 principales de cet appareil 1 sont aussi proches que possible du centre de gravité (en arrière), sans pour autant qu'il y ait un risque de basculement sur la queue quand la cabine est vide.

On obtient aussi avec l'invention que les roues 4 de nez soient suffisamment vers l'avant, sans toutefois être trop en avant pour ne pas déformer l'habitacle au sol ou à l'atterrissage (et par exemple provoquer de criques de verrière).

La figure 2 montre un exemple évocateur d'intégration de la structure 5, de l'atterrisseur 2, avec des commandes de vol et des équipements d'avionique.

Cette structure 5 comporte ici le caisson 6 qui prend la forme d'une poutre en U dont l'axe longitudinal est sensiblement vertical.

Sur l'extérieur du fond de ce caisson 6 en U, et en avant par rapport à l'appareil 1, on vient fixer l'amortisseur 9.

Ceci apporte des solutions quand l'amortisseur 9 doit pouvoir pénétrer dans le poste de pilotage et y trouver une attache structurale solide ; pour cela, un concept de structure 5 selon l'invention est approprié.

Face aux problèmes de stabilité au sol, la solution retenue ici est d'opérer l'orientation des roues 4 sans déport majeur, à l'aide d'un actionneur électrique (débrayable pour le remorquage au sol).

Ceci présente de plus l'avantage de répondre à l'utilisation spécifique sur pont de bateau, où il faut pouvoir tourner autour du harpon d'amarrage pour s'aligner vers le hangar avant d'arrêter les moteurs (et les rotors).

Sur les appareils 1 d'un certain tonnage (par exemple de plus de 7 tonnes) équipés d'un train auxiliaire de nez de type droit, il faut en effet développer les atterrisseurs connus ce qui oblige à des développements spécifiques navals, sans déport entre les roues et le pivot d'orientation associé à un actionneur d'orientation, pour permettre la manoeuvre sur pont de frégate.

Par ailleurs, il est possible avec l'invention d'aboutir à un train auxiliaire 2 très compact en partie basse : le coffre 27 de train 2 nécessaire n'est plus par exemple que d'environ 950 mm de longueur et peut toujours garder 400 mm de hauteur.

Le comportement au crash devient parfaitement sain et prévisible puisque :
- les roues 4 sont maintenues en position droite par l'actionneur et ne risquent donc pas de rentrer en travers dans le coffre 27 de train 2 ;
- la hauteur de ce coffre 27 est calculée pour que le bas de la structure 5 puisse s'écraser lors d'un crash sans être gênée par les roues 4 : ces dernières peuvent en effet remonter suffisamment haut dans le coffre 27.

L'amortisseur 9 peut combiner sans difficultés majeures les fonctions atterrissage normal, crash, et rétraction, d'autant plus que la position relevée des roues 4 correspond à la position des roues 4 en fin de crash.

Il devient même possible au sein d'un appareil 1 selon l'invention, d'avoir le même amortisseur 9 (aux réglages près) sur le train de nez et sur des trains principaux, si ceux-ci sont du type à balancier.

Enfin, ce type de train est moins cher qu'un atterrisseur 2 auxiliaire classique, et selon les essais effectués à ce jour, il est plus fiable relativement aux fuites et usures des pistons.

Dans des réalisations, l'actionneur d'orientation est un moteur électrique avec grand rapport d'engrenage, placé directement sur l'axe des charnières.

Avec l'invention, il est aisé d'assurer que le train 2 soit orientable à au moins ± 180° et rétractable et de pouvoir verrouiller le train 2 dans l'axe (position de roulage en ligne droite) en évitant le phénomène de shimmy.

Dans les variantes de l'invention où l'installation du vérin 9 est prévue sensiblement à l'horizontale, il faut associer une ferrure 64 de renvoi d'angle près de l'attache avant du balancier.

Cette solution évite l'intrusion du vérin 9 dans l'habitacle.

Mais en raison des bras de levier introduits par le renvoi d'angle, les efforts engendrés sont amplifiés et on doit alors renforcer les points d'attache sur la structure 5 pour le vérin et pour le balancier.

## Revendications

1. Aéronef (1) à voilure tournante muni d'un atterrisseur (2) auxiliaire orientable de nez, cet atterrisseur (2) étant escamotable sensiblement d'avant en arrière et comportant au moins :
- un ensemble roulant (46), avec un axe de roulement (47) autour duquel tourne au moins une roue (4) ;
- un système oscillant (13) longitudinal par rapport à l'aéronef, à proximité d'une extrémité libre (51) duquel système (13) est monté l'axe de roulement (47), tandis qu'à une extrémité d'articulation (52) avant, longitudinalement opposée à l'extrémité libre (51), le système oscillant (13) est monté pivotant par au moins une articulation (12) transversale d'ancrage (11) sur une structure (5) de reprise d'efforts destinée à être rendue rigidement solidaire de l'aéronef (1), l'axe de roulement (47) étant agencé sur le système oscillant (13) par l'intermédiaire d'un pivot d'orientation (54) ;
- un vérin-amortisseur (9) dont une extrémité de liaison (56) est articulée sur le système oscillant (13), le vérin-amortisseur (9) ayant à l'opposé axialement de son extrémité de liaison (56) une extrémité de raccord (57) articulée sur la structure (5) et
- le système oscillant (13) présentant un débattement d'élévation (58), autour de son extrémité d'articulation avant (52), supérieur à un débattement d'amortissement (59) ;
**caractérisé en ce que** :
- ledit pivot d'orientation (54) comporte un axe d'orientation (53) sensiblement sécant à l'axe de roulement (47), ledit pivot d'orientation (54) permettant de braquer la roue (4) de part et d'autre d'une position correspondant au roulage de l'aéronef (1) en ligne droite à l'aide d'un actionneur d'orientation (55), relié à une partie du pivot d'orientation (54) solidaire en rotation de l'axe de roulement (47) ; et
- le vérin-amortisseur (9) sensiblement étendu suivant une direction longitudinale (X) par rapport au dit aéronef, possède des moyens de rétraction du système oscillant (13), au-delà d'une position de butée de fin de débattement (59) d'amortissement, de sorte que ce système oscillant (13) et le vérin-amortisseur (9) assurent à la fois des fonctions d'amortissement de chocs et d'escamotage de l'atterrisseur (2).

2. Aéronef selon la revendication 1,
**caractérisé en ce que** l'actionneur (55) d'orientation est sensiblement intégré autour de l'axe d'orientation (53), l'actionneur (55) comportant un moteur électrique ayant en sortie un entraînement fortement démultiplié, tel qu'un engrenage, avec une douille entraînée en orientation et reliée à la partie du pivot d'orientation solidaire de l'axe de roulement, et une douille statique en orientation solidaire du système oscillant (13).

3. Aéronef selon l'une quelconque des revendications 1 à 2,
**caractérisé en ce que** l'extrémité de liaison (56) et l'extrémité de raccord (57) du vérin-amortisseur (9) sont articulées par des rotules respectivement sur le système oscillant (13) et la structure (5), de manière à ce que le vérin-amortisseur (9) soit principalement sollicité le long de son axe de coulissement.

4. Aéronef selon l'une quelconque des revendications 1 à 3,
**caractérisé en ce que** l'extrémité de raccord (57) dudit vérin-amortisseur (9) est destinée à être articulée à un plancher structural inférieur (10) renforcé de la structure (5), tandis que son extrémité de liaison (56) est associée à une ferrure (64) de renvoi d'angle ou analogues du système oscillant (13).

5. Aéronef selon l'une quelconque des revendications précédentes,
**caractérisé en ce que** ledit vérin-amortisseur (9) sensiblement longitudinal (X) est essentiellement destiné à être logé dans un coffre (27) de la structure (5) prévu pour l'escamotage de l'atterrisseur (2), l'extrémité de liaison (56) du vérin-amortisseur (9) étant à proximité de l'extrémité (52) d'articulation avant du système oscillant (13).

6. Aéronef selon la revendication 4,
**caractérisé en ce que** l'extrémité de raccord (57) dudit vérin-amortisseur (9) est en avant de l'extrémité de liaison (56), ledit vérin-amortisseur (9) étant destiné à avoir son extrémité (56) de liaison dans un coffre (27) de la structure (5) tandis que son extrémité (57) de raccord est en saillie longitudinalement (X) de ce coffre (27) vers l'avant.

7. Aéronef selon l'une quelconque des revendications 4 à 6,
**caractérisé en ce que** le vérin-amortisseur (9) est sensiblement étendu suivant la direction longitudinale (X) et acquière une légère inclinaison à sa rétraction et à l'amortissement, ou inversement, soit ;
- de bas en haut et d'avant en arrière ; soit
- de haut en bas et d'avant en arrière.

8. Aéronef selon l'une quelconque des revendications précédentes,
**caractérisé en ce que** le système oscillant (13) est un balancier tiré à bras unique en élévation, l'axe de roulement (47) de l'ensemble roulant (46) étant monté sensiblement fixe longitudinalement (X) et en élévation (Z) par rapport à l'extrémité libre (51).

9. Aéronef selon l'une quelconque des revendications 1 à 7,
**caractérisé en ce que** le système oscillant (13) est un parallélogramme déformable, afin que le pivot d'orientation (54) ait son axe d'orientation (53) sensiblement maintenu étendu suivant la direction d'élévation (Z), entre des positions haute et basse du système oscillant (13) à l'amortissement et à la rétraction, ce système oscillant (13) comportant une paire de bras tirés disposés l'un au dessus de l'autre en élévation (Z).

10. Aéronef selon l'une quelconque des revendications précédentes,
**caractérisé en ce que** l'ensemble roulant (46) possède au moins une roue (4) dont un flasque et la bande de roulement (49) viennent en élévation (Z) sensiblement jusqu'au niveau de l'extrémité libre (51) du système oscillant (13) ; par exemple cet ensemble (46) possède deux roues (4) disposées parallèlement et transversalement de part et d'autre de l'extrémité libre (51) du système oscillant.

11. Aéronef selon l'une quelconque des revendications précédentes,
**caractérisé en ce que** l'atterrisseur (2) présente:
- des moyens (50) à fonctionnement spécifique en cas de crash, aptes à inhiber en cas de crash la fonction de rétraction et éventuellement celle d'amortissement de l'amortisseur (9) ; et
- des moyens (67) de limitation d'efforts en cas de crash, agencés pour qu'une fois la rétraction et éventuellement l'amortissement inhibés, l'énergie du crash provoque la remontée du système oscillant (13) sur l'amplitude (60) supplémentaire voire sur le débattement (59) d'amortissement, avec une absorption d'efforts opérée par ces moyens (67) de limitation.

12. Aéronef selon la revendication 11,
**caractérisé en ce que** les moyens (67) de limitation sont au moins en partie intégrés au vérin-amortisseur (9), et par exemple complètement intégrés à ce dernier (9).

13. Aéronef selon la revendication 11 ou 12,
**caractérisé en ce que** les moyens (67) de limitation sont au moins en partie intégrés au système oscillant (13), par exemple des moyens (67) de limitation intégrés au pivot d'orientation (54) apportent à ce système oscillant (13) une course (68) additionnelle d'absorption d'énergie lors d'un crash.

14. Aéronef selon l'une des revendications 11 à 13,
**caractérisé en ce que** les moyens (50) à fonctionnement spécifique sont agencés pour inhiber en cas de crash, seulement la rétraction du système oscillant (13), de sorte que l'absorption d'énergie est alors disponible sur l'amplitude (60) supplémentaire de débattement, et éventuellement sur une course (68) additionnelle offerte par des moyens (67) de limitation disposés hors du vérin-amortisseur.

15. Aéronef selon l'une des revendications 11 à 14,
**caractérisé en ce que** les moyens (50) à fonctionnement spécifique sont agencés pour inhiber en cas de crash, la rétraction et l'amortissement du vérin-amortisseur (9), de sorte que l'absorption d'énergie est alors disponible sur le débattement (58) maximal.

16. Aéronef selon l'une quelconque des revendications précédentes, **caractérisé en ce que** ladite structure (5) comporte au moins :
- un agencement rigide (6, 19-21) sensiblement étendu suivant une direction d'élévation (Z) ;
- un plancher structural inférieur (10) rigidement lié à l'agencement (6, 19-21) et délimitant au moins en partie un coffre (27) d'escamotage de l'atterrisseur (2) ; et
- un plancher mécanique (22) supérieur, rigidement fixé à l'agencement (6, 19-21) à proximité d'extrémités supérieures de bras latéraux (19, 20) de cet agencement ;
la structure (5) présentant en vue d'élévation longitudinale une forme de « L » où l'agencement (6, 19-21) forme un caisson (6) transversalement central, et le système oscillant (13) de l'atterrisseur (2) est disposé sensiblement au droit de ce caisson (6) qui participe au sein de la structure (5) à la reprise des efforts issus de cet atterrisseur (2).

17. Aéronef selon la revendication 16,
**caractérisée en ce que** :
- le caisson (6) et au moins deux bras latéraux (19, 20) de l'agencement (6, 19-21) sont sensiblement étendus suivant la direction d'élévation (Z), tandis que le plancher structural inférieur (10) est étendu depuis ces caisson (6) et bras (19, 20), sensiblement longitudinalement vers l'avant ;
- le caisson (6) présente un profil au moins partiellement ouvert en section dans un plan (X, Y) longitudinal et transversal, avec au moins une ouverture (23) qui débouche vers l'arrière de manière à ménager au moins un logement (24) ; et
- les bras latéraux (19, 20) de l'agencement rigide (6, 19-21) sont étendus à distance transversalement du caisson (6), de manière à dégager transversalement de part et d'autre de ce caisson (6), un passage (25, 26) de circulation et de visibilité.

18. Aéronef selon la revendication 16 ou 17,
**caractérisée en ce que** cette structure (5) comporte au moins :
- au sein du plancher structural inférieur (10) au moins :
. un point d'ancrage (11) destiné à recevoir une articulation (12) du système oscillant (13) de l'atterrisseur (2) ;
. deux longerons (14, 15) étendus longitudinalement d'arrière en avant depuis une base inférieure de l'agencement (6, 19-21) ; et
. deux traverses (16, 17), disposées sensiblement à la transversale suivant à angle droit par rapport au caisson (6), l'une (16) de ces traverses étant longitudinalement en avant du caisson (6) et l'autre (17) sensiblement au droit d'une face arrière (18) de ce caisson (6) ;
- ainsi qu'au sein de l'agencement (6, 19-21), deux bras latéraux (19, 20) étendus sensiblement en élévation vers le haut depuis l'arrière du plancher structural inférieur (10), de part et d'autre de l'agencement (6, 19-21).

19. Aéronef selon l'une des revendications 16 à 18,
**caractérisée en ce que** le coffre (27) d'escamotage est agencé longitudinalement depuis la traverse avant (16) du plancher structural inférieur (10) sensiblement jusqu'au droit d'une face (18) arrière du caisson (6) et/ou possède sensiblement les mêmes dimensions transversalement que ce caisson (6).

20. Aéronef selon l'une des revendications 16 à 19,
**caractérisée en ce que** l'articulation transversale (8) d'ancrage du vérin-amortisseur (9) est disposée sensiblement au droit du caisson (6), par exemple sur celui-ci (6) ou en dessous sur le plancher structural inférieur (10).

21. Aéronef selon l'une des revendications 16 à 20, **caractérisée en ce que** l'extrémité de liaison (56) du vérin-amortisseur (9) au système oscillant (13) est disposée sensiblement au droit du caisson (6), par exemple légèrement en avant d'une face (37) avant de ce caisson (6) suivant la direction longitudinale (X).

22. Aéronef selon l'une des revendications 16 à 21,
**caractérisée en ce que** le caisson (6) et/ou les planchers structural inférieur (10) et mécanique supérieur (22) sont au moins en partie en matériau composite, par exemple en éléments formés par sandwiches carbone/carbone et reliés par rivetage et/ou collage.

23. Aéronef selon l'une des revendications 16 à 22
**caractérisé en ce que** l'atterrisseur (2) et la structure (5) sont agencés de sorte que les efforts d'atterrissage sont répartis au sein de la structure (5) de reprise par le caisson central (6), entre les planchers structural inférieur (10) et mécanique supérieur (22).

24. Aéronef selon la revendication 23,
**caractérisé en ce que** la structure (5) est recouverte par un carénage de fuselage (3), un tel carénage de fuselage (3) comporte au moins :
- un revêtement travaillant, qui fait partie intégrante du fuselage (3) ; et/ou
- une surface transparente améliorant la visibilité vers l'extérieur de l'appareil (1) ; et/ou
- une trappe, de train (2) ou analogues.

25. Aéronef selon la revendication 23 ou 24,
**caractérisée en ce que** des équipements tels que radars (29) ou de détection (45) sont montés sur la structure (5) de manière à ne pas entraver leur installation et fonctionnement sur l'aéronef (1).

## Claims

1. Rotary wing aircraft (1) provided with a steerable auxiliary nose undercarriage (2), this undercarriage (2) being retractable substantially rearwards and comprising at least:
- a wheel set (46) having a wheel axle (47) about which at least one wheel (4) rotates;
- an oscillating system (13) longitudinal relative to the aircraft, close to a free end (51) of which system (13) the wheel axle (47) is mounted, while at a hinged front end (52), longitudinally opposite the free end (51), the oscillating system (13) is pivotally mounted via at least one transverse hinge (12) for anchoring (11) to a force-absorbing structure (5) designed to be rigidly secured to the aircraft (1), the wheel axle (47) being arranged on the oscillating system (13) via a steering pivot (54);
- a shock-absorbing actuator (9) having a connection end (56) hinged to the oscillating system (13), the shock-absorbing actuator (9) having a coupling end (57) axially opposite its connection end (56), the coupling end being hinged to the structure (5), and
- the oscillating system (13) exhibiting an elevation deflection (58) about its hinged front end (52) that is greater than a shock-absorbing deflection (59);
**characterised in that**:
- said steering pivot (54) comprises a steering axis (53) substantially intersecting the wheel axle (47), said steering pivot (54) enabling the wheel (4) to be steered on either side of a position corresponding to the aircraft (1) running in a straight line by means of a steering actuator (55) connected to a portion of the steering pivot (54) that is constrained to rotate with the wheel axle (47); and
- the shock-absorbing actuator (9), substantially extending in a longitudinal direction (X) relative to said aircraft, possesses means for retracting the oscillating system (13) beyond an abutment position marking the end of the shock-absorbing deflection (59), so that this oscillating system (13) and the shock-absorbing actuator (9) perform both a function of absorbing shocks and a function of retracting the undercarriage (2).

2. Aircraft according to Claim 1,
**characterised in that** the steering actuator (55) is substantially integrated about the steering axis (53), the steering actuator (55) comprising an electric motor having a high step-down driving output, such as a gearing, with a bushing that is driven in terms of steering and connected to the portion of the steering pivot that is secured to the wheel axle, and a bushing that is stationary in terms of steering and secured to the oscillating system (13).

3. Aircraft according to either one of Claims 1 to 2,
**characterised in that** the connection end (56) and the coupling end (57) of the shock-absorbing actuator (9) are hinged by ball joints respectively to the oscillating system (13) and to the structure (5), in such a manner that the shock-absorbing actuator (9) is stressed mainly along its sliding axis.

4. Aircraft according to any one of Claims 1 to 3,
**characterised in that** the coupling end (57) of said shock-absorbing actuator (9) is designed for hinged connection to a reinforced structural bottom floor (10) of the structure (5), while its connection end (56) is associated with a crank fitting (64) or the like of the oscillating system (13).

5. Aircraft according to any one of the preceding claims,
**characterised in that** said substantially longitudinal (X) shock-absorbing actuator (9) is designed essentially to be housed in a well (27) of the structure (5) for receiving the undercarriage (2) when retracted, the connection end (56) of the shock-absorbing actuator (9) being close to the hinged front end (52) of the oscillating system (13).

6. Aircraft according to Claim 4,
**characterised in that** the coupling end (57) of said shock-absorbing actuator (9) is in front of the connection end (56), said shock-absorbing actuator (9) being designed to have its connection end (56) in a well (27) of the structure (5) while its coupling end (57) projects longitudinally (X) forwards from this well (27).

7. Aircraft according to any one of Claims 4 to 6,
**characterised in that** the shock-absorbing actuator (9) extends substantially in the longitudinal direction (X) and acquires a slight inclination on retraction and on shock absorbing, or vice versa, either:
- upwards and rearwards; or else
- downwards and rearwards.

8. Aircraft according to any one of the preceding claims,
**characterised in that** the oscillating system (13) is a trailed single-arm rocker that rocks in elevation, the wheel axle (47) of the wheel set (46) being mounted substantially stationary both longitudinally (X) and in elevation (Z) relative to the free end (51).

9. Aircraft according to any one of Claims 1 to 7,
**characterised in that** the oscillating system (13) is a deformable parallelogram, so that the steering pivot (54) has its steering axis (53) maintained substantially extending in the elevation direction (Z) between high and low positions of the oscillating system (13) on shock absorbing and on retraction, this oscillating system (13) comprising a pair of trailed arms disposed one above the other in elevation (Z).

10. Aircraft according to any one of the preceding claims,
**characterised in that** the wheel set (46) possesses at least one wheel (4), of which a flange and the tread (49) come in elevation (Z) substantially up to the level of the free end (51) of the oscillating system (13); for example this wheel set (46) possesses two wheels (4) disposed in parallel and transversely on either side of the free end (51) of the oscillating system.

11. Aircraft according to any one of the preceding claims,
**characterised in that** the undercarriage (2) has:
- means (50) with specific operation in the event of a crash, and suitable, in the event of a crash, for inhibiting the retraction function and possibly the shock-absorption function of the shock-absorbing actuator (9); and
- means (67) for limiting forces in the event of a crash, arranged so that once the retraction and possibly the shock absorption have been inhibited, the crash energy causes the oscillating system (13) to rise over the additional amplitude (60) or even over the shock-absorbing deflection (59), with forces being absorbed by these limiting means (67).

12. Aircraft according to Claim 11,
**characterised in that** the limiting means (67) are integrated at least in part in the shock-absorbing actuator (9), for example being completely integrated in the latter (9).

13. Aircraft according to Claim 11 or 12,
**characterised in that** the limiting means (67) are integrated at least in part in the oscillating system (13), for example limiting means (67) are integrated in the steering pivot (54), thereby providing this oscillating system (13) with an energy-absorbing additional stroke (68) in the event of a crash.

14. Aircraft according to one of Claims 11 to 13,
**characterised in that** the means (50) with specific operation are arranged to inhibit, in the event of a crash, only the retraction of the oscillating system (13), so that energy absorption is then available over the additional deflection amplitude (60), and possibly over an additional stroke (68) provided by limiting means (67) located outside the shock-absorbing actuator.

15. Aircraft according to one of Claims 11 to 14,
**characterised in that** the means (50) with specific operation are arranged to inhibit, in the event of a crash, both retraction and shock absorption by the shock-absorbing actuator (9), so that energy absorption is then available over the maximum deflection (58).

16. Aircraft according to any one of the preceding claims, **characterised in that** said structure (5) comprises at least:
- a rigid arrangement (6, 19-21) extending substantially in an elevation direction (Z);
- a structural bottom floor (10) rigidly connected to the arrangement (6, 19-21) and defining at least part of a well (27) for retracting the undercarriage (2); and
- a machine top floor (22) rigidly secured to the arrangement (6, 19-21) close to top ends of lateral arms (19, 20) of this arrangement;
the structure (5) having, in longitudinal elevation view, an L-shape in which the arrangement (6, 19-21) forms a transversely centred box (6), and the oscillating system (13) of the undercarriage (2) is disposed substantially in line with this box (6), which contributes within the structure (5) to taking up forces coming from this undercarriage (2).

17. Aircraft according to Claim 16,
**characterised in that**:
- the box (6) and at least two lateral arms (19, 20) of the arrangement (6, 19-21) extend substantially in the elevation direction (Z), while the structural bottom floor (10) extends from this box (6) and these lateral arms (19, 20) substantially longitudinally in a forward direction;
- the box (6) has a profile that is at least partially open in section in a longitudinal and transverse plane (X, Y), with at least one opening (23) which opens rearwardly so as to provide at least one housing (24); and
- the lateral arms (19, 20) of the rigid arrangement (6, 19-21) extend transversely at a distance from the box (6) so as to leave transversely on either side of this box (6) a passage (25, 26) for movement and visibility.

18. Aircraft according to Claim 16 or 17,
**characterised in that** this structure (5) comprises at least:
- within the structural bottom floor (10) at least:
· an anchor point (11) designed to receive a hinge (12) of the oscillating system (13) of the undercarriage (2);
two longitudinal members (14, 15) extending longitudinally forwards from a bottom base of the arrangement (6, 19-21); and
two transverse members (16, 17) disposed substantially transversely at right angles relative to the box (6), one (16) of these transverse members being longitudinally in front of the box (6) and the other (17) being substantially in line with a rear face (18) of this box (6);
- and within the arrangement (6, 19-21), two lateral arms (19, 20) extending substantially in elevation upwards from the rear of the structural bottom floor (10) on either side of the arrangement (6, 19-21).

19. Aircraft according to one of Claims 16 to 18,
**characterised in that** the retraction well (27) is arranged longitudinally from the front transverse member (16) of the structural bottom floor (10) substantially up to a point in line with a rear face (18) of the box (6) and/or possesses substantially the same transverse dimensions as this box (6).

20. Aircraft according to one of Claims 16 to 19,
**characterised in that** the transverse hinge (8) for anchoring the shock-absorbing actuator (9) is disposed substantially in line with the box (6), for example on the latter (6) or beneath it on the structural bottom floor (10).

21. Aircraft according to one of Claims 16 to 20,
**characterised in that** the connection end (56) of the shock-absorbing actuator (9) connecting it to the oscillating system (13) is disposed substantially in line with the box (6), for example slightly in front of a front face (37) of this box (6) in the longitudinal direction (X).

22. Aircraft according to one of Claims 16 to 21,
**characterised in that** the box (6) and/or the structural bottom floor (10) and machine top floor (22) are made at least in part of composite material, for example of elements formed by carbon/carbon sandwiches connected by riveting and/or adhesive bonding.

23. Aircraft according to one of Claims 16 to 22,
**characterised in that** the undercarriage (2) and the structure (5) are arranged in such a manner that the landing forces are distributed within the structure (5) to be taken up by the central box (6) between the structural bottom floor (10) and the machine top floor (22).

24. Aircraft according to Claim 23,
**characterised in that** the structure (5) is covered by a fairing of the fuselage (3), such a fairing or the fuselage (3) comprising at least:
- a stress-bearing covering forming an integral part of the fuselage (3); and/or
- a transparent surface improving visibility to the outside of the aircraft (1); and/or
- a hatch for the landing gear (2) or the like.

25. Aircraft according to Claim 23 or 24,
**characterised in that** equipment such as radars (29) or detection equipment (45) is mounted on the structure (5) in such a manner that the installation and operation thereof on the aircraft (1) is not impeded.

## Patentansprüche

1. Drehflügler (1) mit einem ausrichtbaren Hilfs-Bugfahrwerk (2), wobei dieses Fahrwerk (2) im Wesentlichen von vorne nach hinten einziehbar ist und mindestens aufweist:
- eine rollende Einheit (46) mit einer Rollachse (47), um die mindestens ein Rad (4) dreht;
- ein schwingendes System (13) in Längsrichtung bezüglich des Luftfahrzeugs, wobei in der Nähe eines freien Endes (51) des Systems (13) die Rollachse (47) montiert ist, während an einem vorderen Gelenkende (52) in Längsrichtung entgegengesetzt zum dem freien Ende (51) das schwingende System (13) durch mindestens ein Quergelenk (12) zur Verankerung (11) auf einer Lastaufnahmestruktur (5) schwenkbar montiert ist, die dazu bestimmt ist, steif mit dem Luftfahrzeug (1) verbunden zu werden, wobei die Rollachse (47) mittels eines Richtzapfens (54) auf dem schwingenden System (13) angeordnet ist;
- einen Stossdämpferzylinder (9), von dem ein Verbindungsende (56) an das schwingende System (13) angelenkt ist, wobei der Stossdämpferzylinder (9) axial entgegengesetzt zu seinem Verbindungsende (56) ein Anschlussende (57) aufweist, das an die Struktur (5) angelenkt ist, und
- das schwingende System (13) einen Elevationsausschlag (58) um sein vorderes Gelenkende (52) hat, der größer ist als ein Dämpfungsausschlag (59),
**dadurch gekennzeichnet, dass**:
- der Richtzapfen (54) eine Richtachse (53) aufweist, die die Rollachse (47) im Wesentlichen schneidet, wobei der Richtzapfen (54) es ermöglicht, das Rad (4) zu beiden Seiten einer Position einzuschlagen, die dem Rollen des Luftfahrzeugs (1) in gerader Linie entspricht, mit Hilfe eines Richtstellantriebs (55), der mit einem Teil des Richtzapfens (54) verbunden ist, der in Drehung mit der Rollachse (47) fest verbunden ist; und
- der Stossdämpferzylinder (9), der sich im Wesentlichen in einer Längsrichtung (X) bezüglich des Luftfahrzeugs erstreckt, Mittel für den Rückzug des schwingenden Systems (13) über eine Anschlagstellung des Dämpfungsausschlagendes (59) hinaus besitzt, so dass dieses schwingende System (13) und der Stossdämpferzylinder (9) gleichzeitig Funktionen der Stoßdämpfung und des Einziehens des Fahrwerks (2) gewährleisten.

2. Luftfahrzeug nach Anspruch 1, **dadurch gekennzeichnet, dass** der Richtstellantrieb (55) im Wesentlichen um die Richtachse (53) herum integriert ist, wobei der Stellantrieb (55) einen Elektromotor aufweist, der am Ausgang einen stark untersetzten Antrieb wie ein Zahnradgetriebe hat, mit einer in Ausrichtung angetriebenen und mit dem Teil des Richtzapfens, der fest mit der Rollachse verbunden ist, verbundenen Hülse, und mit einer in Ausrichtung statischen Hülse, die fest mit dem schwingenden System (13) verbunden ist.

3. Luftfahrzeug nach einem der Ansprüche 1 bis 2, **dadurch gekennzeichnet, dass** das Verbindungsende (56) und das Anschlussende (57) des Stossdämpferzylinders (9) von Kugelgelenken am schwingenden System (13) bzw. an der Struktur (5) angelenkt werden, damit der Stossdämpferzylinder (9) hauptsächlich entlang seiner Gleitachse beaufschlagt wird.

4. Luftfahrzeug nach einem der Ansprüche 1 bis 3, **dadurch gekennzeichnet, dass** das Anschlussende (57) des Stossdämpferzylinders (9) dazu bestimmt ist, an einem unteren verstärkten Strukturboden (10) der Struktur (5) angelenkt zu werden, während sein Verbindungsende (56) einem Winkelübertragungsbeschlag (64) oder Ähnlichem des schwingenden Systems (13) zugeordnet ist

5. Luftfahrzeug nach einem der vorhergehenden Ansprüche, **dadurch gekennzeichnet, dass** der im Wesentlichen in Längsrichtung (X) liegende Stossdämpferzylinder (9) hauptsächlich dazu bestimmt ist, in einem Kasten (27) der Struktur (5) angeordnet zu werden, der für das Einziehen des Fahrwerks (2) vorgesehen ist, wobei das Verbindungsende (56) des Stossdämpferzylinders (9) sich in der Nähe des vorderen Gelenkendes (52) des schwingenden Systems (13) befindet.

6. Luftfahrzeug nach Anspruch 4, **dadurch gekennzeichnet, dass** das Anschlussende (57) des Stossdämpferzylinders (9) sich vor dem Verbindungsende (56) befindet, wobei der Stossdämpferzylinder (9) dazu bestimmt ist, sein Verbindungsende (56) in einem Kasten (27) der Struktur (5) zu haben, während sein Anschlussende (57) in Längsrichtung (X) von diesem Kasten (27) nach vorne vorsteht.

7. Luftfahrzeug nach einem der Ansprüche 4 bis 6, **dadurch gekennzeichnet, dass** der Stossdämpferzylinder (9) sich im Wesentlichen in Längsrichtung (X) erstreckt und bei seinem Rückzug und beim Dämpfen oder umgekehrt eine leichte Neigung annimmt, nämlich:
- von unten nach oben und von hinten nach vorne; oder
- von oben nach unten und von hinten nach vorne.

8. Luftfahrzeug nach einem der vorhergehenden Ansprüche, **dadurch gekennzeichnet, dass** das schwingende System (13) ein gezogener Schwenkhebel mit einem einzigen Arm in Elevationsrichtung ist, wobei die Rollachse (47) der rollenden Einheit (46) im Wesentlichen in Längsrichtung (X) und in Elevationsrichtung (Z) bezüglich des freien Endes (51) fest montiert ist.

9. Luftfahrzeug nach einem der Ansprüche 1 bis 7, **dadurch gekennzeichnet, dass** das schwingende System (13) ein verformbares Parallelogramm ist, damit die Richtachse (53) des Richtzapfens (54) sich im Wesentlichen gemäß der Elevationsrichtung (Z) zwischen einer oberen und einer unteren Position des schwingenden Systems (13) beim Dämpfen und beim Rückzug erstrekkend gehalten wird, wobei dieses schwingende System (13) ein Paar von gezogenen Armen aufweist, die in Elevationsrichtung (Z) übereinander angeordnet sind.

10. Luftfahrzeug nach einem der vorhergehenden Ansprüche, **dadurch gekennzeichnet, dass** die rollende Einheit (46) mindestens ein Rad (4) aufweist, von dem ein Flansch und die Lauffläche (49) in Elevationsrichtung (Z) im Wesentlichen bis in Höhe des freien Endes (51) des schwingenden Systems (13) kommen; zum Beispiel besitzt diese Einheit (46) zwei Räder (4), die parallel und quer zu beiden Seiten des freien Endes (51) des schwingenden Systems angeordnet sind.

11. Luftfahrzeug nach einem der vorhergehenden Ansprüche, **dadurch gekennzeichnet, dass** das Fahrwerk (2) aufweist:
- Mittel (50) mit spezifischem Betrieb im Fall eines Crashs, die in der Lage sind, im Fall eines Crashs die Funktion des Rückzugs und ggf. diejenige des Dämpfens des Stossdämpferzylinders (9) zu verhindern; und
- Kraftbegrenzungsmittel (67) im Fall eines Crashs, die angeordnet sind, damit, wenn der Rückzug und ggf. das Dämpfen verhindert sind, die Energie des Crashs das Ansteigen des schwingenden Systems (13) auf die zusätzliche Amplitude (60), sogar auf den Dämpfungsausschlag (59) bewirkt, mit einer Kräfteabsorption, die von diesen Begrenzungsmitteln (67) durchgeführt wird.

12. Luftfahrzeug nach Anspruch 11, **dadurch gekennzeichnet, dass** die Begrenzungsmittel (67) zumindest zum Teil in den Stossdämpferzylinder (9) integriert sind, und zum Beispiel vollständig in diesen letzteren (9) integriert sind.

13. Luftfahrzeug nach Anspruch 11 oder 12, **dadurch gekennzeichnet, dass** die Begrenzungsmittel (67) zumindest zum Teil in das schwingende System (13) integriert sind, zum Beispiel verleihen in den Richtzapfen (54) integrierte Begrenzungsmittel (67) diesem schwingenden System (13) einen zusätzlichen Hub (68) der Energieabsorption im Fall eines Crashs.

14. Luftfahrzeug nach einem der Ansprüche 11 bis 13, **dadurch gekennzeichnet, dass** die Mittel (50) mit spezifischem Betrieb angeordnet sind, um im Fall eines Crashs nur den Rückzug des schwingenden Systems (13) zu verhindern, so dass die Energieabsorption dann bei der zusätzlichen Ausschlagamplitude (60) und ggf. bei einem zusätzlichen Hub (68) verfügbar ist, der von Begrenzungsmitteln (67) angeboten wird, die außerhalb des Stossdämpferzylinders angeordnet sind.

15. Luftfahrzeug nach einem der Ansprüche 11 bis 14, **dadurch gekennzeichnet, dass** die Mittel (50) mit spezifischem Betrieb angeordnet sind, um im Fall eines Crashs den Rückzug und das Dämpfen des Stossdämpferzylinders (9) zu verhindern, so dass die Energieabsorption dann beim maximalen Ausschlag (58) verfügbar ist.

16. Luftfahrzeug nach einem der vorhergehenden Ansprüche, **dadurch gekennzeichnet, dass** die Struktur (5) mindestens aufweist:
- eine steife Anordnung (6, 19-21), die sich im Wesentlichen in einer Elevationsrichtung (Z) erstreckt;
- einen unteren Strukturboden (10), der steif mit der Anordnung (6, 19-21) verbunden ist und mindestens zum Teil einen Einziehkasten (27) des Fahrwerks (2) begrenzt; und
- einen oberen Mechanikboden (22), der steif an der Anordnung (6, 19-21) in der Nähe von oberen Enden von Seitenarmen (19, 20) dieser Anordnung befestigt ist;
wobei die Struktur (5) in Längs-Elevationsansicht die Form eines "L" aufweist, wobei die Anordnung (6, 19-21) ein in Querrichtung zentrales Gehäuse (6) bildet, und das schwingende System (13) des Fahrwerks (2) im Wesentlichen im rechten Winkel vor diesem Gehäuse (6) angeordnet ist, das sich innerhalb der Struktur (5) an der Aufnahme von von diesem Fahrwerk (2) stammenden Kräften beteiligt.

17. Luftfahrzeug nach Anspruch 16, **dadurch gekennzeichnet, dass**:
- das Gehäuse (6) und mindestens zwei Seitenarme (19, 20) der Anordnung (6, 19-21) sich im Wesentlichen in Elevationsrichtung (Z) erstrecken, während der untere Strukturboden (10) sich von diesem Gehäuse (6) und diesen Armen (19, 20) im Wesentlichen in Längsrichtung nach vorne erstreckt;
- das Gehäuse (6) ein Profil hat, das zumindest teilweise im Querschnitt in einer Längs- und Querebene (X, Y) offen ist, mit mindestens einer Öffnung (23), die nach hinten mündet, um mindestens eine Aufnahme (24) einzurichten; und
- die Seitenarme (19, 20) der steifen Anordnung (6,19-21) sich in Abstand quer zum Gehäuse (6) erstrecken, um in Querrichtung zu beiden Seiten dieses Gehäuses (6) einen Durchgangs- und Sichtdurchlass (25, 26) freizugeben.

18. Luftfahrzeug nach Anspruch 16 oder 17, **dadurch gekennzeichnet, dass** diese Struktur (5) mindestens aufweist:
- innerhalb des unteren Strukturbodens (10) mindestens:
. einen Verankerungspunkt (11), der dazu bestimmt ist, ein Gelenk (12) des schwingenden Systems (13) des Fahrwerks (2) aufzunehmen;
. zwei Längsträger (14, 15), die sich in Längsrichtung von hinten nach vorne von einer unteren Basis der Anordnung (6, 19-21) erstrecken; und
. zwei Querträger (16, 17), die sich im Wesentlichen quer in rechtem Winkel bezüglich des Gehäuses (6) erstrecken, wobei einer (16) dieser Querträger sich in Längsrichtung vor dem Gehäuse (6) und der andere (17) im Wesentlichen in rechtem Winkel zu einer Rückseite (18) dieses Gehäuses (6) befindet;
- sowie innerhalb der Anordnung (6, 19-21) zwei Seitenarme (19, 20), die sich im Wesentlichen in Elevationsrichtung nach oben von der Rückseite des unteren Strukturbodens (10) zu beiden Seiten der Anordnung (6, 19-21) erstrecken.

19. Luftfahrzeug nach einem der Ansprüche 16 bis 18, **dadurch gekennzeichnet, dass** der Einziehkasten (27) in Längsrichtung vom vorderen Querträger (16) des unteren Strukturbodens (10) im Wesentlichen bis im rechten Winkel vor eine Rückseite (18) des Gehäuses (6) angeordnet ist und/oder im Wesentlichen die gleichen Querabmessungen wie dieses Gehäuse (6) aufweist.

20. Luftfahrzeug nach einem der Ansprüche 16 bis 19, **dadurch gekennzeichnet, dass** das Quergelenk (8) zur Verankerung des Stossdämpferzylinders (9) im Wesentlichen in rechtem Winkel zum Gehäuse (6) angeordnet ist, zum Beispiel auf diesem (6) oder darunter auf dem unteren Strukturboden (10).

21. Luftfahrzeug nach einem der Ansprüche 16 bis 20, **dadurch gekennzeichnet, dass** das Verbindungsende (56) des Stossdämpferzylinders (9) am schwingenden System (13) im Wesentlichen in rechtem Winkel zum Gehäuse (6) angeordnet ist, zum Beispiel leicht vor einer Vorderseite (37) dieses Gehäuses (6) gemäß der Längsrichtung (X).

22. Luftfahrzeug nach einem der Ansprüche 16 bis 21, **dadurch gekennzeichnet, dass** das Gehäuse (6) und/oder der untere Strukturboden (10) und obere Mechanikboden (22) zumindest zum Teil aus Verbundmaterial sind, zum Beispiel aus Elementen, die von einem Kohlenstoff/Kohlenstoff-Verbund geformt und durch Nieten und/oder Kleben verbunden sind.

23. Luftfahrzeug nach einem der Ansprüche 16 bis 22, **dadurch gekennzeichnet, dass** das Fahrwerk (2) und die Struktur (5) so angeordnet sind, dass die Landekräfte innerhalb der Aufnahmestruktur (5) durch das zentrale Gehäuse (6) zwischen dem unteren Strukturboden (10) und dem oberen Mechanikboden (22) verteilt sind.

24. Luftfahrzeug nach Anspruch 23, **dadurch gekennzeichnet, dass** die Struktur (5) von einer Rumpfverschalung (3) bedeckt ist, wobei eine solche Rumpfverschalung (3) mindestens aufweist:
- eine tragende Außenhaut, die integrierender Bestandteil des Rumpfs (3) ist; und/oder
- eine durchsichtige Fläche, die die Sicht nach außerhalb des Geräts (1) verbessert; und/ oder
- eine Klappe eines Fahrwerks (2) oder Ähnliches.

25. Luftfahrzeug nach Anspruch 23 oder 24, **dadurch gekennzeichnet, dass** Ausrüstungen wie Radargeräte (29) oder Erfassungsgeräte (45) so auf die Struktur (5) montiert sind, dass ihr Einbau und ihr Betrieb auf dem Luftfahrzeug (1) nicht behindert werden.
